# EUROPEAN PATENT APPLICATION

(11) **EP 2 610 005 A2**
(43) Date of publication of application: **03.07.2013**
(21) Application number: 12174222.5
(22) Date of filing: 28.06.2012
(51) Int. Cl.: B01J 29/12, B01J 29/74, C10G 45/64

(54) **Method for identifying catalysts suitable for improving the fuel quality of hydrocarbon mixtures and upgrading process using the same**

(30) Priority: 28.12.2011 IT MI20112411
(71) Applicant: ENI S.p.A., 00144 Rome (IT)
(72) Inventor: Weitkamp, Jens, 72160 Horb (DE); Calemma, Vincenzo, 20097 San Donato Milanese (MI) (IT); Ferrari, Marco Massimo, 20148 Milano (IT); Santi, Dominic, 74321 Bietigheim-Bissingen (DE); Rabl, Sandra, 71032 Boblingen (DE)
(74) Representative: Bottero, Carlo

(57) **Abstract**

A method for identifying upgrading catalysts from catalytic compositions containing Pt and/or Ir, and large-pore zeolites, wherein the negative charges are partly neutralized by alkaline metals, alkaline-earth metals and lanthanoids, and partly by hydrogen ions, wherein said method comprises reacting decalin with hydrogen under hydrodecyclization conditions, in the presence of one of said catalytic compositions, calculating an index based on the selectivities to C4 hydrocarbons and C2 hydrocarbons obtained in said reaction and comparing said index with a predetermined range of values. The catalytic compositions thus selected can be used in an upgrading process of hydrotreated hydrocarbon mixtures for obtaining high-quality diesel fuels with a reduced density.

## Description

The present invention relates to a method for identifying catalysts active in processes for enhancing the fuel quality of hydrotreated hydrocarbon mixtures.

The invention also relates to a process for upgrading hydrotreated hydrocarbon mixtures, which comprises reacting said mixtures with the catalytic compositions identified by means of the method of the invention.

The invention further relates to the use of a particular catalytic composition based on Beta zeolite capable of providing the best results for the upgrading of hydrocarbon mixtures. Said composition is new and is a further object of the present invention.

The catalytic compositions identified with the method of the invention allows high-quality diesel fuels to be obtained by the almost complete removal of the total aromatic compounds and reduction in the content of multi-ring naphthenes, in favour of the formation of paraffins and monocyclic naphthenes, with a decrease in the density and T₉₅ and increase in the cetane number. This type of modification in the composition of the mixture generates a fuel having a reduced particulate emission, as described, for example in K. Nakakita, H. Ban, S. Takasu, Y. Hotta, K. Inagaki, W. Weissman, J. Farrell SAE paper 2003-01-1914; K. Nakakita, K. Akihama, W. Weissman, J.T. Farrell, Int. J. Engine Res. 6 (2005) 187-205; I.P. Androulakis, M.D. Weisel, C.S. Hsu, K. Qian, L.A. Green, J.T. Farrell, K.Nakakita, Energy Fuels 19 (2005) 111-119.

The production of fuels for use in new-generation engines with reduced emissions is one of the main drivers for the development of innovative processes in the refining industry. The definition of future specifications of fuels is the source of continual discussion but evolution towards increasingly restrictive regulations with respect to emissions is certain, and this will require products with significantly different characteristics than those currently in use, also from a compositional point of view.

With respect, in particular, to diesel fuel for motor vehicles, in addition to a reduction in the sulfur content, other parameters linked to the quality are: the content of condensed polyaromatic compounds, the density, the T95 (temperature at which 95% of the product is distilled) and the cetane number or index. The quality of fuels is strictly associated with their compositional characteristics; with respect to the density, cetane number and particulate emissions, the most desirable components are, in order, paraffins >> naphthenes > aromatic compounds. Polycondensed aromatic compounds are the least desirable as, with the same number of carbon atoms, they have the lowest cetane number, the highest density and the highest boiling point; furthermore they increase emissions in diesel engines of both CO and particulate. Most probably, not all of the characteristics mentioned above will be the object of future regulations, however a reduction in aromatic compounds, and more particularly polynuclear aromatic compounds (PNA), is a highly desirable result due to their direct impact on emissions (E. Brevoord in Catal. Courier, S. Doctor Ed, Vol. 59, Albemarle Catalysts, 2005, 10-11 and K.Nakanita et al., Int. J. Engin. Res. 6 (2005), 187-205). In this respect, a more restrictive European directive has recently been issued, relating to the maximum content of polynuclear aromatic compounds, which has been further reduced from 11 to 8%, starting from 31-12-2010 (Directive 2009/30/EC of the European Parliament and of the Council, 23.04.2009, amending Directive 98/70/EC relating to the quality of petrol and diesel fuels, Official Journal of the European Communities, L140/88, 5.6.2009). From a general point of view, it would be desirable to obtain a reduction in the content of aromatic structures through their hydrogenation and subsequent hydrodecyclization until isoparaffins and, above all, n-paraffins, are obtained, compatibly with the cold properties: the most desirable components are therefore isoparaffins with a low branching degree. This would cause a distinct change in the properties of diesel fuels, such as:
- a decrease in the density;
- an increase in the cetane number;
- a reduction in emissions;
- a reduction in the boiling point with the same number of carbon atoms present in the molecule.

Processes commercially available for obtaining medium distillates with a reduced content of aromatic compounds are currently: dearomatization and hydrocracking. In the former case, the dearomatization of the feedstock essentially takes place by the hydrogenation of the aromatic structures with the formation of the corresponding naphthene structures. In this case there is:
- a reduction in the density;
- a reduction in the boiling point;
- a modest increase in the cetane number;
- a limited formation of products with a lower molecular weight with respect to the feedstock.

A simple reduction in aromatic compounds with cyclo-alkane structures preserves the yield to diesel but maintains undesired cyclic structures and does not significantly increase the cetane number (R. C. Santana, P. T. Do, M. S., W. E. Alvarez, J. D. Taylor, E. L. Sughrue and D. E. Resasco, Fuel 85 (2006) 643-656).

In the latter case, hydrocracking, the opening of the cyclo-alkane structures to paraffins is obtained, with significant increases in the cetane number, but with a considerable production of light fractions and a consequent loss in medium distillate.

The necessity is therefore felt for an alternative process which, in addition to saturating the aromatic rings, causes the selective opening of the naphthene rings (Selective Ring Opening, SRO); this overall process therefore converts the aromatic systems, with either one or more condensed rings, into paraffins which boil within the distillation range of diesel fuel. For this purpose, the opening of the naphthene ring must take place by breakage of a C-C endocyclic bond, so that the final paraffinic product has the same number of carbon atoms as the starting naphthene. It is also desirable for the C-C endocyclic bonds which are broken to also comprise those adjacent to the tertiary carbon atoms, in order to form mainly linear paraffins and isoparaffins with a weak branching degree.

In this respect, US 5,763,731 describes the use of Ir together with an acid co-catalyst of the zeolitic type in order to favour the contraction of the rings having 6 carbon atoms to rings having 5 carbon atoms, as these more easily undergo ring-opening reactions. This acidity causes the excessive formation of light cracking products and highly-branched paraffins, as a consequence of the skeleton isomerization reaction of the paraffins initially present and those formed as a result of the ring-opening process.

In order to overcome this problem, US 2002/0050466 describes the use of a bimetallic Ir-Pt catalyst supported on Al₂O₃, whose content of each metal is lower than 2.0%, and preferably < 1.0%, regardless of the Ir/Pt ratio. Also in this case, the acidity is not optimized so as to obtain a mixture of products having a high cetane number; it is consequently necessary to mix the products obtained with a diesel fuel having a cetane number of at least 40.

WO2005/103207 describes the upgrading of distillates containing naphthene compounds, by the transformation of said compounds into the corresponding paraffinic derivatives, prevalently branched, which uses catalysts containing Pt, Pd, Ir, Rh, Ru and Re and an acid silico-aluminate selected from a suitable micro-mesoporous silico-aluminate and a MTW zeolite.

WO2007/006473 describes a process for improving the fuel quality of hydrotreated hydrocarbon mixtures by enrichment in alkyl benzene compounds, at least partly deriving from the conversion of the naphtha-aromatic structures contained in said hydrotreated mixtures.

WO 2009/106324 describes a process for improving the fuel properties of suitable hydrocarbon mixtures, in terms of a decrease in the density, an increase in the cetane number, a reduction in emissions and a reduction in the boiling point with the same number of carbon atoms present in the molecule, by eliminating their content of aromatic structures through their contemporaneous hydrogenation and hydrodecylcization, until a product prevalently containing n-paraffins, isoparaffins and monocyclic alkylnaphthenes is obtained. This process uses a particular catalyst which contains a metallic component, selected from Ir and a mixture of Ir with one or more metals selected from Pt, Pd, Ru, Rh and Re, and an acid component containing a particular silico-alumina.

In K. Chandra Mouli, V. Sundaramurthy and A.K. Dalai, J. Mol. Catal. A: Chemical 304 (2009) 77-84 a ring-opening process of decalin is described, in the presence of catalysts containing Pt and Ir supported on Y zeolite or beta zeolite in completely acid form, i.e. in the form in which the negative charges present in the lattice of the zeolite, due to the presence of aluminium in tetrahedral form, are all saturated by hydrogen ions. The completely acid form of the zeolite is obtained by the corresponding ammonia form by calcination at 500°C. Ir and Pt are introduced by impregnation with aqueous solutions containing the precursors IrCl₃ and H2[PtCl₆], followed by calcination in air, for 3 hours, at 500°C. In this case, the selectivity to paraffins, compounds with a high cetane number, is extremely low.

MI2010A001657 describes a process for improving the fuel properties of suitable hydrotreated, possibly dearomatized, hydrocarbon mixtures by reaction with hydrogen, in the presence of a particular catalyst which contains a metallic component and a FAU zeolite containing one or more cations of alkaline, alkaline-earth metals, and lanthanoids, and containing calibrated quantities of hydrogen ions.

MI2010A002446 describes a process for improving the fuel properties of suitable hydrotreated, possibly dearomatized, hydrocarbon mixtures by reaction with hydrogen, in the presence of a catalytic system comprising two catalytic areas having a different chemical composition.

The Applicant has now found a method for identifying catalysts particularly suitable for being used as upgrading catalysts: the catalysts thus identified are extremely effective in enhancing the fuel properties of certain hydrocarbon mixtures, wherein these improvements relate to density, and cetane number. By treating these mixtures with hydrogen, in the presence of the catalysts thus selected, high selectivities to products deriving from the ring-opening of compounds containing one or more naphthene rings, are in fact obtained, wherein said compounds containing one or more naphthene rings are present in the hydrocarbon mixtures used or formed during the treatment itself. The products obtained are mainly n-paraffins, iso-paraffins and naphthenes containing a single ring, whereas parallel cracking reactions of both the alkyl chains bound to the naphthene rings and also of the paraffins present in the feedstock and paraffins formed during the process itself, are extremely limited. The catalysts identified with the method of the present invention contain suitable noble metals and large-pore zeolites and correspond to those compositions which, when tested by means of said method, provide particular results with respect to the formation of certain cracking products, in a reaction selected as reference model: these results are correlated to a high yield to products with a partial and/or total opening of the naphthene rings.

A first object of the present invention therefore relates to a method for identifying catalysts active in processes for improving the fuel quality of hydrotreated hydrocarbon mixtures. Said method is applied to catalytic compositions (A) comprising the following components:
a) Pt, Ir or mixtures thereof
b) a large-pore zeolite having a crystalline lattice composed of silica and an oxide YOX selected from alumina, boron oxide and mixtures thereof, wherein the negative charges present in the crystalline lattice are neutralized by one or more cations of metals Me selected from alkaline metals, alkaline-earth metals and lanthanoids, and x moles of hydrogen ions per mole of aluminium, boron, or mixtures thereof present in the lattice, wherein x ranges from 0.04 to 0.65.

The method comprises:
(1) reacting decalin with hydrogen, in the presence of one of said catalytic compositions, at a temperature ranging from 250 to 380°C and a pressure equal to 5.2 MPa;
(2) calculating:
   - for the compositions A_{Ir} the I_{Ir} index, wherein:
      A_{Ir} is a catalytic composition (A) wherein the metal (a) is Ir or a mixture of Ir and Pt wherein the iridium moles are greater than or equal to the Pt moles, and I_{Ir} corresponds to the ratio SelC4/SelC2, wherein SelC4 and
      SelC2 are the selectivity to C4 hydrocarbons and C2 hydrocarbons respectively, obtained in the reaction of step (1),
   - for the compositions A_{Pt} the I_{Pt} index wherein:
      A_{Pt} is a catalytic composition (A) wherein the metal (a) is Pt or a mixture of Pt and Ir wherein the Pt moles are greater than the Ir moles, and I_{Pt} corresponds to the ratio SelC4/SelC5, wherein SelC4 and SelC5 are the selectivity to C4 hydrocarbons and C5 hydrocarbons respectively, obtained in the reaction of step (1),
(3) comparing the I_{Ir} index obtained for the compositions of the A_{Ir} type within the range 0.2-10.0 and comparing the I_{Pt} index obtained for the compositions of the A_{Pt} type within the range 1.3-2.4, the catalytic compositions of the type A_{Ir} and A_{Pt}, whose relative indexes respectively fall within said ranges, including the extremes, being active.

The selectivities to C2, C4 and C5 cracking products from which the I_{Pt} and I_{Ir} indexes are obtained, are measured at a decalin conversion within the range of 70 to 100%.

A further object of the present invention relates to an upgrading process of hydrotreated hydrocarbon mixtures which comprises reacting said mixtures with a catalytic composition (A) comprising the following components:
a) Pt, Ir or mixtures thereof
b) a large-pore zeolite having a crystalline lattice composed of silica and an oxide YOX selected from alumina, boron oxide and mixtures thereof, wherein the negative charges present in the crystalline lattice are neutralized by one or more cations of metals Me selected from alkaline metals, alkaline-earth metals and lanthanoids, and x moles of hydrogen ions per mole of aluminium, boron or mixtures thereof present in the crystalline lattice, wherein x ranges from 0.04 to 0.65,
   wherein said catalytic composition:
   - when the metal (a) is Ir or a mixture of Ir and Pt wherein the iridium moles are greater than or equal to the Pt moles, is characterized by an I_{Ir} index ranging from 0.2 to 10.0, wherein said index corresponds to the ratio SelC4/SelC2, wherein SelC4 and SelC2 are the selectivity to C4 hydrocarbons and C2 hydrocarbons respectively, obtained, by means of the catalytic composition, in the reaction of decalin with hydrogen at a temperature ranging from 250 to 380°C, at a pressure of 5.2 MPa;
   - when the metal (a) is Pt or a mixture of Pt and Ir wherein the Pt moles are greater than the Ir moles, is characterized by an I_{Pt} index ranging from 1.3 to 2.4, wherein said I_{Pt} index corresponds to the ratio SelC4/SelC5, wherein SelC4 and SelC5 are the selectivity to C4 hydrocarbons and C5 hydrocarbons respectively, obtained by means of the catalytic composition, in the reaction of decalin with hydrogen at a temperature ranging from 250 to 380°C, at a pressure of 5.2 MPa.

The reaction with decalin on which the method of the present invention is based, is preferably carried out at a temperature ranging from 320 to 380°C.

The selectivities to Cⱼ hydrocarbons, with j ranging from 1 to 9, corresponding to the selectivities to cracking products, are calculated as a ratio between the moles of Cj at the outlet and the moles of decalin converted to cracking products i.e. products with less than 10 carbon atoms. The quantification of the moles of cracking products can be easily effected with simple techniques known to experts in the field, such as for example the gaschromatographic technique. The method, object of the invention, consequently does not require the evaluation and quantification of the more complex ring-opening products.

The identification method of the present invention is used within the range of compositions comprising the following components:
a) Pt, Ir or mixtures thereof
b) a large-pore zeolite having a crystalline lattice composed of silica and an oxide YOX selected from alumina, boron oxide and mixtures thereof, wherein the negative charges present in the crystalline lattice are neutralized by one or more cations of metals Me selected from alkaline metals, alkaline-earth metals and lanthanoids, and x moles of hydrogen ions per mole of aluminium and/or boron present in the crystalline lattice, wherein x ranges from 0.04 to 0.65.

The metals Me selected from alkaline metals, alkaline-earth metals and lanthanoids, are preferably Na, Li, K, Rb, Cs, Sr, Ca, Mg, La, or mixtures thereof. Mixtures of lanthanoids or mixtures containing lanthanoids and one or more metals Me selected from alkaline metals and alkaline-earth metals, can also be conveniently used.

In the catalytic composition used in the process of the present invention, the metallic component (a) is preferably in a quantity ranging from 0.7 to 5% by weight, even more preferably ranging from 2 to 4% by weight, with respect to the weight of the catalytic composition.

The weight percentage of metal refers to the content of element expressed as metallic element; in the catalytic composition, after calcination, said elements are in the form of oxide; in the final catalytic composition, after reduction, they are in the form of metallic element.

The large-pore zeolites are zeolites characterized by a pore diameter larger than 6.5 Å. Large-pore zeolites which can be conveniently used are zeolites of the BEA, EMT, LTL, MAZ, MOR, OFF, FAU type and are preferably BEA, FAU, EMT and LTL zeolites.

Zeolites which can be conveniently used for this purpose are, for example, beta zeolite, zeolite X, Y, zeolite L, mazzite, mordenite, offretite, EMC-2.

The large-pore zeolites can also be used in their dealuminated form, which can be obtained with post-synthesis dealumination treatment. Dealumination treatment is well-known to experts in the field and can be effected, for example, by treatment with strong acids, thermal treatment, hydrothermal treatment, substitution of aluminium with silicon. The dealumination treatment indicated above and which can be conveniently used for preparing dealuminated zeolites is described for example in G. H. Kühl, Catalysis and Zeolites - Fundamentals and Applications (eds. J. Weitkamp and L. Puppe), Springer, pp.81-197, 1999.

The total quantity of metallic cations and hydrogen ions present in the structure of the large-pore zeolites is such as to saturate the negative charges which are created in the crystalline lattice of the zeolite due to the presence of aluminium and/or boron in tetrahedral coordination. The value of x preferably varies from 0.1 to 0.2.

A preferred aspect is to use a large-pore zeolite having a crystalline lattice composed of silica and an oxide YOX selected from alumina, boron oxide and mixtures thereof, wherein the negative charges present in the crystalline lattice are neutralized by x moles of hydrogen moles per mole of aluminium and/or boron, wherein x ranges from 0.04 to 0.65, and one or more cations of metals Me selected from alkaline metals, alkaline-earth metals and lanthanoids, wherein the sum of the products of the moles of each metallic cation Me times the valence of said metallic cation is equal to (1-x).

If only one cation of metal Me is present, said sum will correspond only to the product of the moles of said cation times its valence.

Component (b) of the catalytic compositions of the present invention is prepared starting from the zeolite in sodium form (Na-Z), or from a zeolite, obtained from the zeolite in sodium form (Na-Z) by partial exchange with ammonium ions, called Na,NH₄-Z.

This ion exchange can be effected, for example, by suspension in an aqueous solution of an ammonium salt. The ammonium salt can be selected, for example, from NH₄NO₃, NH₄Cl, NH₄CH₃COO. The solution used contains ammonium ions in a concentration which can vary from 0.001 to 0.1 moles/1. The exchange is preferably carried out by suspending the Na-Z zeolite in the aqueous solution of the salt, and maintaining the suspension under stirring at a temperature preferably ranging from 60 to 90°C, for a time preferably ranging from 3 to 5 hours. The Na-Z zeolite and the zeolite obtained from this by exchange with ammonium ions, indicated with Na,NH₄-Z, can both be used for the preparation of the catalytic composition of the present invention in which the metal Me is sodium. In particular, the Na-Z zeolite is preferably used for preparing catalytic compositions containing the lowest quantities of H⁺ ion relating to the molar range 0.04-0.65, even more preferably the compositions having values of x ranging from 0.04 to 0.2; the zeolites Na,NH₄-Z are preferably used for preparing catalytic compositions containing the highest quantities of H⁺ ion relating to the molar range 0.04-0.65, even more preferably compositions having values of x higher than 0.2 and lower than or equal to 0.65.

All the other zeolites containing the metals Me according to the invention, different from Na, and x moles of hydrogen wherein x ranges from 0.04 to 0.65, are prepared from the Na-Z zeolite. In particular, zeolites containing one or more metals selected from alkaline metals different from sodium, alkaline-earth metals and lanthanoids are prepared from the Na-Z zeolite, by means of ion exchange, using one or more compounds of one or more metals Me, wherein Me is selected from alkaline metals different from sodium, alkaline-earth metals and lanthanoids.

The Na-Z zeolite can also be subjected to a partial ion exchange, using one or more compounds of one or more metals Me, wherein Me is selected from alkaline metals different from sodium, alkaline-earth metals and lanthanoids; only part of the Na ions are exchanged with Me ions, and the resulting zeolite contains the remaining sodium ions and one or more cations of metals Me, wherein Me is one or more metals selected from alkaline metals different from sodium, alkaline-earth metals and lanthanoids.

In order to effect the total or partial ion exchange, the Na-Z zeolite is suspended in deionized water and an aqueous solution of one or more sources of one or more metals Me is added to the suspension, wherein Me is selected from alkaline metals different from sodium, alkaline-earth metals and lanthanoids. Sources which can be conveniently used are salts soluble in aqueous solution, for example the corresponding chlorides. In the case of lanthanoids, nitrates for example can be conveniently used.

The quantity of metal Me used in the ion exchange is selected on the basis of the exchange percentage to be reached: all the known exchange techniques can be used and an expert is capable of obtaining the desired exchange degree. Exchange techniques are described, for example, in R.P. Townsend in " Ion exchange in zeolite", Studies Surf. Scien. Cat., vol. 58, pages 359-390, 1991. After the partial or total ion exchange, the solid is separated, washed with water, dried at a temperature ranging from 60 to 80°C. The zeolites thus obtained are preferably used for preparing catalytic compositions containing the lowest quantity of H⁺ ion relating to the molar range 0-04-0.65, even more preferably compositions having values of x ranging from 0.04 to 0.2.

The zeolites resulting from the partial or total ion exchange can be subsequently subjected to a partial ion exchange with ammonium ions, for example by suspension in an aqueous solution of an ammonium salt. The ammonium salt can be selected for example from NH₄NO₃, NH₄Cl, NH₄CH₃COO. The solution used contains ammonium ions in a concentration which can vary from 0.001 to 0.1 moles/l. The exchange is preferably effected by suspending the zeolite in the aqueous solution of the salt, and maintaining the suspension under stirring at a temperature preferably ranging from 60 to 90°C, for a time preferably ranging from 3 to 5 hours.

The zeolite thus obtained is a zeolite in which the negative charges present in the crystalline lattice are neutralized by Me ions and NH₄⁺ ions, wherein Me indicates one or more metals selected from alkaline metals, alkaline-earth metals and lanthanoids, and possibly sodium ions, if the previous ion exchange carried out on the Na-Z zeolite with the metal Me has been a partial ion exchange: these zeolites, containing either one or more metallic cations and NH₄⁺, are preferably used for preparing catalytic compositions containing the highest quantity of H⁺ ion relating to the molar range 0.04-0.65, even more preferably compositions having values of x higher than 0.2 and lower than or equal to 0.65.

The metallic component (a) is introduced onto the components (b) thus obtained using any of the known techniques, such as ion exchange or impregnation.

According to the impregnation technique, the zeolite is wet with an aqueous solution of a compound of Pt and/or Ir, wherein said zeolite is a zeolite deriving from the preparations described above, containing one or more cations Me selected from alkaline metals, alkaline-earth metals and lanthanoids, and mixtures thereof (Me-Z), possibly partially exchanged with NH₄⁺ (Me, NH₄-Z) ions. Sources of Pt or Ir which can be conveniently used are, for example, H₂IrCl₆, (NH₄)₂IrCl₆, [CH₃COCH=C(O⁻)CH₃]₃Ir, [Ir(NH₃)₅Cl]Cl₂, H₂PtCl₆, Pt(NH₃)₄(OH)₂, Pt(NH₃)₄Cl₂.

The operating temperature ranges from 60 to 90°C, at a pH ranging from 1 to 4. The resulting product is dried, preferably in air, at room temperature, and is calcined in an oxidizing atmosphere preferably at a temperature ranging from 200 to 600°C, for a time ranging from 3 to 5 hours. According to a preferred aspect, a heating profile of 0.5 °C/min is used, with a flow of air ranging from 30 to 100 1/hour.

When the catalytic composition comprises both Pt and Ir, the impregnation is effected with the co-impregnation technique: the Me-Z zeolite, or zeolite Me,NH₄-Z, is wet with pre-mixed aqueous solutions of the compounds of the metals. It is dried at a temperature ranging from 60 to 90°C and is then calcined in an oxidizing atmosphere at a temperature ranging from 200 to 600°C.

According to the ion exchange technique, the zeolite is suspended in deionized water and an aqueous solution of a source of one or more metals selected from Ir and Pt is added to the suspension; said zeolite in accordance with the preparations described above, contains one or more cations Me selected from alkaline metals, alkaline-earth metals and lanthanoids (Me-Z), possibly partially exchanged with NH₄⁺ + (Me,NH₄-Z) ions. Sources of metal (a) which can be conveniently used are the same as those indicated for the impregnation technique. In particular, the zeolite can be suspended in an aqueous solution of a complex or salt of one or more metals (a), operating at room temperature and a pH ranging from 6 to 10.

After the ion exchange, the solid is separated, washed with water, dried at a temperature ranging from 60 to 90°C, and finally thermally treated in an inert or oxidizing atmosphere. Temperatures which are suitable for the purpose are those ranging from 200 to 600°C, for a time ranging from 3 to 5 hours. According to a preferred aspect, a heating profile of 0.5 °C/min is used, with a flow of air ranging from 30 to 100 1/hour.

The compositions thus obtained are in their oxidized form. Said oxidized forms contain Pt and/or Ir in oxide form, one or more metals Me selected from alkaline metals, alkaline-earth metals and lanthanoids, and possibly H⁺ ions in a quantity lower than or equal to 0.65 moles per mole of aluminium, formed, during the calcination, by the decomposition of NH₄⁺ ions possibly present in the composition.

Among the compositions thus prepared, the most active ones are identified by means of the method of the present invention. Before subjecting them to the test with decalin, the compositions can be subjected to extrusion, with traditional binders, such as for example, aluminium oxide, bohemite or pseudobohemite. The extruded product can be prepared according to techniques well-known to experts in the field. The precursor and binder can be pre-mixed in weight ratios ranging from 30:70 to 90:10, preferably from 50:50 to 70:30. At the end of the mixing, the product obtained is consolidated into the final form desired, for example in the form of extruded pellets or tablets.

Before being tested in the method of the present invention, all the compositions, possibly in bound form, are subjected to activation, wherein said activation corresponds to a reduction treatment, preferably preceded by drying. The drying is effected in an inert atmosphere at a temperature ranging from 25 to 100°C, whereas the reduction is obtained by thermal treatment of the catalyst in a reducing atmosphere (H₂) at a temperature ranging from 300 to 450°C, and a pressure preferably ranging from 0.1 to 5.2 MPa

Compositions with a low density of acid sites, and therefore containing a low quantity of H⁺ ions, preferably ranging from 0.04 to 0.2, are formed from catalytic compositions containing one or more metals Me and one or more metals (a): the H⁺ ions present in the final catalytic composition derive from the reduction with H₂ of the oxides of the metal or metals (a), in turn formed during the calcination step following the step of introduction of the metal(s) (a) (from J.Weitkamp, Solid State ionics, 131, (2000), 175-188).

Compositions with a higher density of acid sites, and therefore containing a higher quantity of H⁺ ions, preferably ranging from 0.2 to 0.65, are obtained from catalytic compositions containing, in addition to one or more metals Me and one or more metals (a), also NH₄⁺ ions: during the calcination, following the introduction of the metal (a), the formation of the oxide of the metal(s) (a) is obtained together with the thermal decomposition of the NH₄⁺ ions to give H⁺ ions, and during the subsequent reduction step, further H⁺ ions will be created from the reduction with H₂ of the oxide of the metal or metals (a).

By applying the method of the present invention to catalytic compositions such as those described above, catalytic compositions which are particularly active in the upgrading of hydrotreated hydrocarbon mixtures can be identified simply, which therefore allow extremely high yields to be obtained, of a product which boils within the range of a gas oil cut, but which has a reduced density and an improved cetane number.

By using the catalytic compositions identified with the method of the present invention in hydroconversion processes, the following can be obtained: a substantial increase in the cetane index (number) and a reduction in the density of the mixtures thus treated. The product obtained is considerably enriched in paraffinic and alkylnaphthene compounds with only one ring.

The most active compositions which have been identified are particular compositions containing Ir or Pt and beta zeolite with particular values of x.

A further object of the present invention therefore relates to a process for the upgrading of hydrotreated hydrocarbon mixtures which comprises reacting said mixtures with a catalytic composition comprising the following components:
a) Ir or Pt
b) a Beta zeolite having a crystalline lattice composed of silica and an oxide YOX selected from alumina, boron oxide and mixtures thereof, wherein the negative charges present in the crystalline lattice are neutralized by one or more cations of metals Me selected from alkaline metals, alkaline-earth metals and lanthanoids, and x moles of hydrogen ions per mole of aluminium and/or boron, wherein x ranges from 0.45 to 0.65, or x is higher than or equal to 0.17 and lower than 0.45.

The process can be carried out either in continuous or batchwise and the catalytic composition can have any suitable form, known to experts in the field for these types of process.

According to an aspect of the invention, when (a) is Pt and x is higher than or equal to 0.17 and lower than 0.45, the catalytic composition does not comprise two or more catalytic areas having a different chemical composition, and preferably does not comprise two or more catalytic beds having a different chemical composition.

According to a preferred aspect, the catalytic composition of the present invention comprises the following components:
a) Ir or Pt
b) a Beta zeolite having a crystalline lattice composed of silica and an oxide YOX selected from alumina, boron oxide and mixtures thereof, wherein the negative charges present in the crystalline lattice are neutralized by one or more cations of metals Me selected from alkaline metals, alkaline-earth metals and lanthanoids, and x moles of hydrogen ions per mole of aluminium and/or boron, wherein x ranges from 0.45 to 0.65, or x is higher than or equal to 0.17 and lower than 0.45,
wherein when (a) is Pt and x is higher than or equal to 0.17 and lower than 0.45, the catalytic composition consists of a single catalytic area or several catalytic areas all having the same chemical composition, and preferably consists of a single catalytic bed or several catalytic beds all having the same chemical composition.

According to a preferred aspect, the catalytic composition of the present invention consists of components (a) and (b) and possibly a binder.

According to a preferred aspect, the catalytic composition of the present invention consists of a single catalytic area or several catalytic areas all having the same composition; said composition preferably consists of a single catalytic bed or several catalytic beds all having the same composition.

According to a preferred aspect, the catalytic composition of the present invention comprises the following components:
a) Ir
b) a Beta zeolite having a crystalline lattice composed of silica and an oxide YOX selected from alumina, boron oxide and mixtures thereof, wherein the negative charges present in the crystalline lattice are neutralized by one or more cations of metals Me selected from alkaline metals, alkaline-earth metals and lanthanoids, and x moles of hydrogen ions per mole of aluminium and/or boron, wherein x ranges from 0.45 to 0.65, or x is higher than or equal to 0.17 and lower than 0.45.

In particular, a particularly preferred aspect is that the catalytic composition comprises the following components:
a) Ir
b) a Beta zeolite having a crystalline lattice composed of silica and an oxide YOX selected from alumina, boron oxide and mixtures thereof, wherein the negative charges present in the crystalline lattice are neutralized by one or more cations of metals Me selected from alkaline metals, alkaline-earth metals and lanthanoids, and x moles of hydrogen ions per mole of aluminium and/or boron, wherein x ranges from 0.45 to 0.65.

According to another aspect of the invention, the catalytic composition comprises the following components:
a) Pt
b) a Beta zeolite having a crystalline lattice composed of silica and an oxide YOX selected from alumina, boron oxide and mixtures thereof, wherein the negative charges present in the crystalline lattice are neutralized by one or more cations of metals Me selected from alkaline metals, alkaline-earth metals and lanthanoids, and x moles of hydrogen ions per mole of aluminium and/or boron, wherein x ranges from 0.45 to 0.65 or x is higher than or equal to 0.17 and lower than 0.45.

These compositions are new and form a further object of the present invention. Said compositions, **characterized in that** the zeolite is Beta zeolite and in that x has the values indicated above, prove to be those which are most active in the upgrading of hydrotreated hydrocarbon mixtures.

Said compositions have an I_{Ir} index within the range of 0.2-10.0 and an I_{Pt} index within the range of 1.3-2.4 in accordance with the method of the present invention.

The total quantity of metallic cations and hydrogen ions present in the structure of the Beta zeolite is such as to saturate the negative charges which are created in the crystalline lattice of the zeolite due to the presence of aluminium and/or boron in tetrahedral coordination.

The existence range of Beta zeolite is 7-100 expressed as SiO₂/YO ratio, wherein YOX is aluminium oxide, boron oxide or mixture thereof. Beta zeolites having an existence range of 30 to 150 expressed as SiO₂/YOX ratio, can be prepared by dealumination. The highest values for the SiO₂/YOX ratio in the crystalline lattice of Beta zeolite are obtained with post-synthesis dealumination treatment. Dealumination treatment is well-known to experts in the field and can be effected, for example, by treatment with strong acids, thermal treatment, hydrothermal treatment, substitution of aluminium with silicon.

The dealumination treatment indicated above and which can be conveniently used for preparing dealuminated zeolites of Beta-type is described for example in G. H. Kühl, Catalysis and Zeolites - Fundamentals and Applications (eds. J. Weitkamp and L. Puppe), Springer, pp.81-197, 1999.

In particular, an object of the present invention relates to a process for improving the fuel properties of hydrotreated, and possibly dearomatized, hydrocarbon mixtures, by reaction with hydrogen, in the presence of a catalytic composition comprising the following components:
a) Ir or Pt
b) a Beta zeolite having a crystalline lattice composed of silica and an oxide YOX, selected from alumina, boron oxide and mixtures thereof, with a molar ratio SiO₂/YOX ranging from 7 to 150, wherein the negative charges present in the crystalline lattice are neutralized by x moles of hydrogen ions per mole of aluminium and/or boron, wherein x ranges from 0.45 to 0.65, or x is higher than or equal to 0.17 and lower than 0.45, and by one or more cations of metals Me selected from alkaline metals, alkaline-earth metals and lanthanoids, wherein the sum of the products of the moles of each metallic cation Me times the valence of said metallic cation is equal to (1-x).

If only one cation of metal Me is present, said sum corresponds to the sole product of the moles of said cation times its valence.

In said compositions, preferably when (a) is Pt and x is higher than or equal to 0.17 and lower than 0.45, the catalytic composition consists of a single catalytic area or several catalytic areas all having the same composition; said composition preferably consists of a single catalytic bed or more catalytic beds all having the same composition.

According to a preferred aspect, the catalytic composition comprises:
a) Ir
b) a Beta zeolite having a crystalline lattice composed of silica and an oxide YOX, selected from alumina, boron oxide and mixtures thereof, with a molar ratio SiO₂/YOX ranging from 7 to 150, wherein the negative charges present in the crystalline lattice are neutralized by x moles of hydrogen ions per mole of aluminium and/or boron, wherein x ranges from 0.45 to 0.65, or x is higher than or equal to 0.17 and lower than 0.45, and by one or more cations of metals Me selected from alkaline metals, alkaline-earth metals and lanthanoids, wherein the sum of the products of the moles of each metallic cation Me times the valence of said metallic cation is equal to (1-x).

More specifically, a particularly preferred aspect is that the catalytic composition comprises the following components:
a) Ir
b) a Beta zeolite having a crystalline lattice composed of silica and an oxide YOX selected from alumina, boron oxide and mixtures thereof, with a molar ratio SiO₂/YOX ranging from 7 to 150, wherein the negative charges present in the crystalline lattice are neutralized by x moles of hydrogen ions per mole of aluminium and/or boron, wherein x ranges from 0.45 to 0.65, and by one or more cations of metals Me selected from alkaline metals, alkaline-earth metals and lanthanoids, wherein the sum of the products of the moles of each metallic cation Me times the valence of said metallic cation is equal to (1-x).

According to another preferred aspect, the catalytic composition comprises the following components:
a) Pt
b) a Beta zeolite having a crystalline lattice composed of silica and an oxide YOX, selected from alumina, boron oxide and mixtures thereof, with a molar ratio SiO₂/YOX ranging from 7 to 150, wherein the negative charges present in the crystalline lattice are neutralized by x moles of hydrogen ions per mole of aluminium and/or boron, wherein x ranges from 0.45 to 0.65, or x is higher than or equal to 0.17 and lower than 0.45, and by one or more cations of metals Me selected from alkaline metals, alkaline-earth metals and lanthanoids, wherein the sum of the products of the moles of each metallic cation Me times the valence of said metallic cation is equal to (1-x).

A preferred aspect is that the catalytic composition comprises a Beta zeolite wherein the negative charges present in the crystalline lattice are neutralized by a cation of metal Me selected from alkaline metals, alkaline-earth metals and lanthanoids, and by x moles of hydrogen ions per mole of aluminium and/or boron, wherein x ranges from 0.45 to 0.65, or x is higher than or equal to 0.17 and lower than 0.45.

A particular object of the present invention therefore relates to a process for improving the fuel properties of hydrotreated, and possibly dearomatized, hydrocarbon mixtures, by reaction of said mixtures with hydrogen, in the presence of a catalytic composition comprising:
a) Ir or Pt
b) a Beta zeolite having molar formula (A):

   (1-x)/n Me . x H . YO₂ . y SiO₂ (A)

   wherein Me is a cation of a metal selected from alkaline metals, alkaline-earth metals and lanthanoids,
   Y is Al and/or B
   H is a hydrogen ion,
   y ranges from 3.5 to 75, preferably from 3.5 to 50
   x corresponds to the moles of hydrogen ions and ranges
   from 0.45 to 0.65, or x is higher than or equal to 0.17 and lower than 0.45,
   n is the valence of the cation Me.

With reference to said compositions, when (a) is Pt and x is higher than or equal to 0.17 and lower than 0.45, the catalytic composition preferably consists of a single catalytic area or more catalytic areas all having the same composition and preferably said composition consists of a single catalytic bed or more catalytic beds all having the same composition.

According to a preferred aspect, the catalytic composition comprises the following components:
a) Ir
b) a Beta zeolite having molar formula (A):

   (l-x)/n Me . x H . YO₂ . y SiO₂ (A)
wherein Me is a cation of a metal selected from alkaline metals, alkaline-earth metals and lanthanoids,
Y is Al and/or B
H is a hydrogen ion,
y ranges from 3.5 to 75, preferably from 3.5 to 50
x corresponds to the moles of hydrogen ions and ranges from 0.45 to 0.65, or x is higher than or equal to 0.17 and lower than 0.45,
n is the valence of the cation Me.

In particular, a preferred aspect is that comprises the following components:
a) Ir
b) a Beta zeolite having molar formula (A):

   (l-x)/n Me . x H . YO₂ . y SiO₂ (A)
wherein Me is a cation of a metal selected from alkaline metals, alkaline-earth metals and lanthanoids,
Y is Al and/or B
H is a hydrogen ion,
y ranges from 3.5 to 75, preferably from 3.5 to 50
x corresponds to the moles of hydrogen ions and ranges from 0.45 to 0.65,
n is the valence of the cation Me.

According to another aspect of the invention, the catalytic composition comprises the following components:
a) Pt
b) a Beta zeolite having molar formula (A):

   (l-x)/n Me . x H . YO₂ . y SiO₂ (A)
wherein Me is a cation of a metal selected from alkaline metals, alkaline-earth metals and lanthanoids,
Y is Al and/or B
H is a hydrogen ion,
y ranges from 3.5 to 75, preferably from 3.5 to 50
x corresponds to the moles of hydrogen ions and ranges from 0.45 to 0.65, or x is higher than or equal to 0.17 and lower than 0.45,
n is the valence of the cation Me.

The Beta zeolite is preferably not dealuminated, and y therefore ranges from 3.5 to 50.

All the compositions indicated above are new and are obtained in accordance with the preparations described above, starting from the zeolite in sodium form Na-Z or from the zeolite deriving from the zeolite in sodium form by partial exchange with ammonium ions Na,NH₄-Z, wherein Z is Beta zeolite.

Beta zeolite and its preparation are described for example in US 3308069.

Alkaline metals, alkaline-earth metals and lanthanoids which can be conveniently used are Li, Na, K, Rb, Cs, Mg, Ca, Sr, Ba, La and mixtures thereof. Na, Li, Rb, Cs, lanthanum and mixture of lanthanoids are preferably used.

Beta zeolites containing boron oxide in the crystalline lattice, possibly mixed with aluminium oxide, are described for example in BE 877205, EP 55046, IT 1166822 and EP 438818.

According to a particularly preferred aspect, the hydrotreated hydrocarbon mixtures are subjected to dearomatization, before being treated according to the process of the present invention.

The particular catalytic compositions selected with the method of the present invention allow a considerable improvement in the characteristics of hydrotreated hydrocarbon cuts by saturation of the aromatic rings with naphthene structures immediately followed by the selective opening of part or all of the naphthene rings in the corresponding aliphatic chains with the least possible formation of low-molecular-weight products; in this way, the maximum benefit is obtained in terms of density, boiling point and cetane number. Furthermore, the catalytic compositions selected with the method of the present invention are extremely stable with time and can be used, if desired, at high temperatures, at the same time maintaining an absolutely modest cracking activity.

In the catalytic composition used in the process of the present invention, the metal component (a) is preferably in a quantity ranging from 0.7 to 5 % by weight, even more preferably from 2 to 4% by weight, with respect to the weight of the catalytic composition. The weight percentage of metal relates to the content of element expressed as metallic element; in the catalytic composition, after calcination, said elements are in oxide form; in the final catalytic composition, after reduction, they are in the form of metallic element.

The hydrotreated hydrocarbon mixtures that can be subjected to the upgrading process of the present invention, catalyzed by the catalytic compositions identified with the method described above, are mixtures having boiling ranges from 150 to 450 °C, preferably from 180 to 400 °C, even more preferably from 220 to 400 °C. Mixtures having boiling ranges from 220°C to 360°C are particularly preferred.

In particular, hydrocarbon cuts obtained by the hydrotreatment of oil cuts can be conveniently treated, wherein said oil cuts can be selected, for example, from Gas Oil from Thermal Cracking (TCGO), Gas Oil from Visbreaking (VISGO), Gas Oil from Coking (COGO), or mixtures thereof, Light Cycle Oil (LCO), Heavy Vacuum GasOil (HVGO), the cut 420⁻ of Heavy Cycle Oil (HCO), or hydrocarbon cuts obtained by the hydrotreatment of cuts of a petrochemical origin, such as for example FOK (Fuel Oil Cracking), can be conveniently used. Other feedstocks that can be fed are hydrotreated products of oil cuts such as, for example, oil sands and shales or liquids deriving from coal. A particularly preferred aspect is to use hydrotreated gas oil as hydrocarbon mixture, preferably deriving from Thermal Cracking, or hydrotreated Light Cycle Oil.

Hydrotreatment is a process well-known to experts in the field and is described in Catalysis-Science and Technology, Edited by R. Anderson and M. Boudart, Volume 11, Springer-Verlag, 1996, pages 1-310. It can be effected in one or more fixed bed reactors, and the catalytic beds can contain the same or different catalysts. Catalysts based on metallic compounds of Group VI and/or Group VIII are normally used, on a carrier which is preferably amorphous, such as for example alumina or silica-alumina. Metals which can be conveniently used are for example nickel, cobalt molybdenum and tungsten. Examples of catalysts which can be conveniently used and their preparation are described in Hydrocracking Science and Technology, J.Scherzer, A.J. Gruia, Marcel Dekker, 1996.

The hydrotreatment catalysts are used in sulfided form. Sulfidation can be obtained, for example, by sending onto the catalyst, a suitable feedstock to which a sulfurated compound such as dimethyldisulfide (DMDS), dimethylsulfoxide (DMSO), or other compounds which, upon decomposing, lead to the formation of H₂S, have been added. The hydrotreatment is preferably carried out at a temperature ranging from 200°C to 400°C. The pressures normally range from 2 to 10 MPa, depending on the type of catalyst used, an expert in the field is easily able to define the best conditions for the catalyst selected. During the hydrotreatment, the heteroatoms N and S are eliminated, and the feedstock also undergoes saturation reactions of the aromatic rings with a reduction in the content of aromatic carbon and an enrichment in naphthene-aromatic compounds which are suitable for being treated according to the process of the present invention to give mainly paraffins and naphthenes having a single ring.

According to a particularly preferred aspect of the present invention, the hydrotreated hydrocarbon mixtures are subjected to dearomatization before being fed to the process. During this dearomatization treatment, the hydrotreated hydrocarbon mixture is reacted with hydrogen in the presence of a catalyst, consisting of noble metals supported on SiO₂ or Al₂O₃, at a temperature ranging from 200 to 380°C and a pressure ranging from 2 to 6 MPa. It is preferable to operate at a WHSV ranging from 0.5 to 3 hours⁻¹. The ratio between hydrogen and feedstock (H₂/HC) preferably ranges from 600 to 1,000 Nl/kg.

In order to increase the cetane index and reduce the density of the hydrotreated hydrocarbon mixtures, the upgrading process of the present invention is preferably effected at a temperature ranging from 240 to 380 °C, even more preferably from 280 to 360 °C, at a pressure ranging from 3 to 10 MPa. The pressure is even more preferably higher than 5 MPa and lower than 10 MPa, even more preferably higher than 5 and lower than 8 MPa. The WHSV can range from 0.2 to 3 hours⁻¹. The ratio between hydrogen and feedstock (H₂/HC) preferably ranges from 400 to 3,000 Nl/kg.

The following examples are provided for illustrating the invention claimed herein, without, however, limiting its scope in any way.

### Example 1 - 3.0Ir/Na _{0.90},H_{0.10}-LSX (comparative)

LSX (Low Silica X) zeolite is prepared by the synthesis described hereunder. 9.4 g of sodium aluminate are dissolved in 17 g of demineralized water. 11.2 g of sodium hydroxide in 20 g of demineralized water together with 8.4 g of potassium hydroxide in 20 g of demineralized water are subsequently added under vigorous stirring. 21.4 g of a solution of sodium silicate in 15 g of demineralized water are added after 5 minutes and the formation of a gel is observed after about 2 minutes. The gel is aged for 48 hours at 45°C in a sealed plastic container. Crystallization is effected for 2 hours at 100°C. The mixture is filtered, washed with 3 litres of demineralized water, and dried for at least 12 hours at 80°C in an oven, in order to remove the K⁺ ions. The zeolite sample is stirred twice for 4 hours, at 80°C, in 25 cm³ of a 1M aqueous solution of sodium nitrate, per 1 g of dried zeolite sample. Each of the two times, the sample is filtered after 4 hours, washed with demineralized water until the nitrate ions are no longer observed, and subsequently dried for at least 12 hours at 80°C in an air oven. The ratio between the moles of Si and those of Al in the synthesis gel is equal to 0.97, whereas in the final solid sample it is equal to 1.01, determined by ICP-OES.

The insertion of Ir is effected by suspending 3.0 g of Na-LSX zeolite in 150 g of demineralized water. An aqueous solution of 0.2021 g of [Ir(NH₃)₅Cl]Cl₂ (Colonial Metals, 49.9% Ir) in 50 g of demineralized water is slowly added by means of a drip funnel, with vigorous stirring for 20 minutes. At the end, the suspension is stirred for 4 hours at 80°C. The resulting solid is filtered, washed with 1.0 dm³ of demineralized water and dried for 12 hours at 80°C in an air oven.

The solid obtained is then calcined in air at 300°C for 3 hours in an oven having a heating rate of 0.5°C/min and with a flow-rate of 58 dm³/hour. The composition thus obtained is in the form prior to the reduction treatment, i.e. it is in oxidized form.

The catalyst powder is pressed in the absence of binder at 127 MPa for 15 min, and the tablets thus formed are ground and sieved. The fraction having dimensions ranging from 0.20 mm to 0.32 mm is that used for the subsequent catalytic tests.

The noble metal contained in the composition is reduced in the same equipment used for the catalytic tests at a pressure of 5.2 MPa and with a hydrogen flow of 130 cm³·min⁻¹, heating the sample from room temperature to 380°C with a heating rate of 2°C·min⁻¹ and maintaining the final temperature for 2 hours.

The catalytic composition thus obtained is in the final reduced form and contains iridium in a quantity equal to 3.0% by weight with respect to the weight of the composition.

### Example 2 - 0.94Ir/Na_{0.90},H_{0.10}-X (comparative)

Na-X zeolite, having a molar ratio Si/Al of 1.21, was purchased from Strem Chemicals, lot nr. 14 247S. Before its further treatment, 60 g of dry zeolite are suspended in 1.7 kg of an aqueous solution 1M of NaNO_{3.} The suspension is heated under stirring for 4 hours to 80°C. After filtration, the zeolite is washed with demineralized water and dried at 80°C for 12 hours in an air oven.

The insertion of Ir is effected by suspending 6.0 g of Na-X zeolite in 80 g of demineralized water. An aqueous solution of 0.144 g of [Ir(NH₃)₅Cl]Cl₂ (Colonial Metals, 49.9% Ir) in 50 g of demineralized water is slowly added by means of a drip funnel, with vigorous stirring for 20 minutes. At the end, the suspension is stirred for 4 hours at 80°C. The resulting solid is filtered, washed with 1.0 dm³ of demineralized water and dried for 48 hours at 80°C in an air oven.

After ion exchange, the sample is then calcined in air at 300°C for 3 hours in an oven having a heating rate of 0.5°C/min and a flow-rate of 58 dm³/hours⁻¹. The catalyst powder is pressed without a binder at 127 MPa for 15 minutes and the tablets thus formed are ground and sieved. The fraction having dimensions ranging from 0.20 µm to 0.32 µm is that used for the subsequent catalytic tests. The noble metal is reduced in the same equipment used for the catalytic tests at a pressure of 5.2 MPa and with a hydrogen flow of 130 cm³·min⁻¹, heating the sample from room temperature to 380°C with a heating rate of 2°C·min⁻¹ and maintaining the final temperature for 2 hours.

The catalytic composition thus obtained is in the final reduced form and contains iridium in a quantity of 0.94% by weight with respect to the weight of the composition.

### Example 3 - 2.3Ir-0,73Pt/Na_{0.90},H_{0.10}-Y

Na-Y zeolite having a molar ratio Si/Al of 2.41, was purchased from Strem Chemicals, lot nr. 148 960. Before its treatment, 60 g of dry zeolite are suspended in 1.7 kg of an aqueous solution 1M of NaNO₃. The suspension is heated under stirring for 4 hours to 80°C. After filtration, the zeolite is washed with demineralized water and dried at 80°C for 12 hours in an air oven.

5.3 g of dry Na-Y zeolite are suspended in 150 g of demineralized water. An aqueous solution of 0.285 g of [Ir(NH₃)₅Cl]Cl₂ (Colonial Metals, 49.9% Ir) and 0.071 g of [Pt(NH₃)₄]Cl₂ (ChemPur, 55.63 wt.-% Pt) in 50 g of demineralized water is slowly added by means of a drip funnel, during 15 minutes of vigorous stirring. At the end, the suspension is stirred for 4 hours at 80°C. The resulting solid is filtered, washed with 2.0 dm³ of demineralized water and dried for 48 hours at 80°C in an air oven, in addition to 12 hours at room temperature.

After ion exchange, the solid is then calcined in air at 300°C for 3 hours in an oven having a heating rate of 0.5°C/min and a flow-rate of 58 dm³/hours⁻¹. The catalyst powder is pressed without a binder at 127 MPa for 15 minutes and the tablets thus formed are ground and sieved. The fraction having dimensions ranging from 0.20 mm to 0.32 mm is that used for the subsequent catalytic tests. The noble metal is reduced in the same equipment used for the catalytic tests at a pressure of 5.2 MPa and with a hydrogen flow of 130 cm³·min⁻¹, heating the sample from room temperature to 380°C with a heating rate of 2°C·min⁻¹ and maintaining the final temperature for 2 hours. The catalytic composition thus obtained is in the final reduced form and contains iridium in a quantity of 2.3% by weight and Pt in a quantity equal to 0.73% with respect to the weight of the composition.

### Esempio 4: 3.2Ir/H_{0.61}K_{0.39}-Beta

For the synthesis of a zeolite based on silicon oxide and aluminium oxide, [Al]Beta, the so-called Dry-Gel Conversion (DGC) is used. The essential characteristic of this method is the use of a dry gel which enters into contact with vapours only. After drying in air, the gel in powder form is placed on a porous plate in an autoclave coated with Teflon.

9.980 g of aluminium sulfate hydrate (Riedel-de Haën, chemically pure) were dissolved in 5.0 g of demineralized water, heated to 80°C under stirring for 30 minutes. In the meantime, 69.190 g of colloidal SiO₂ (Ludox HS-40. Aldrich, 40 wt.-% SiO₂ in H₂O) 66.842 g of tetraethyl ammonium hydroxide (Sigma-Aldrich, 40 wt.-% in H₂O) and 12.977 g of NaOH solution (ChemSolute, 99 wt-%, 4 mol·dm³) are mixed under stirring, for 30 minutes at room temperature. The two solutions are subsequently put in contact and stirred for a further 2 hours at room temperature. The gel obtained is heated to 80°C in an oil bath and dried. About 1.5 g of the dried gel are introduced into the autoclave coated with Teflon described above, with 2 g of demineralized water. The conversion is carried out at 175°C for 48 hours. The molar ratio nₛᵢ/n_{Al} in the dry gel is 15.4 whereas that determined in the solid sample by means of ICP-OES, is equal to 14.0. The templating agent is removed by heating in a nitrogen flow at 58 dm³·hour⁻¹ from room temperature to a 450°C, with a heating rate of 1 °C·min⁻¹, subsequently maintaining the temperature at 450 °C for 24 hours, changing the gaseous feed with synthetic air, with a flow-rate of 58 dm³·hrs⁻¹, maintaining the temperature for a further 24 hours.

Before any further modification, 4 g of the dry zeolite are placed under stirring, twice for 4 hours at 80°C in 160 cm³ of an aqueous solution 1M of NaNO₃. After each treatment, the sample is filtered, washed with demineralized water and dried for 12 hours at 80°C in an air oven.

3.0 g of the dry zeolite Na-[Al]Beta thus obtained are suspended in 150 g of demineralized water. An aqueous solution of 0.2156 g of [Ir(NH₃)₅Cl]Cl₂ (Colonial Metals, 49.9% Ir) in 50 g of demineralized water is slowly added by means of a drip funnel during 20 minutes of vigorous stirring. At the end, the suspension is stirred for 4 hours at 80°C. The resulting solid is filtered, washed with 1.0 dm³ of demineralized water and dried for 12 hours at 80°C in an air oven. The zeolite thus obtained has a Si/Al molar ratio of 14.

The catalyst powder is pressed without a binder at 127 MPa for 15 minutes and the tablets thus formed are ground and sieved. The fraction having dimensions ranging from 0.20 mm to 0.32 mm is that used for the subsequent catalytic tests. The catalyst is then calcined in air at 300°C for 3 hours in a continuous reactor with a heating rate of 0.5°C·min⁻¹ and a flow-rate of 200 cm³·min⁻¹ of synthetic air.

The noble metal is reduced in the same equipment used for the catalytic tests at a pressure of 5.2 MPa and with a hydrogen flow of 130 cm³·min⁻¹, heating the sample from room temperature to 380°C with a heating rate of 2°C·min⁻¹ and maintaining the final temperature for 2 hours. The catalytic composition thus obtained is in the final reduced form and contains iridium in a quantity of 3.2% by weight with respect to the weight of the composition.

### Example 5 - 3.3Ir/Cs_{0.42}, H_{0.58}-Beta

For the synthesis of Na-[Al]Beta, 6.628 g of aluminium sulfate (Riedel-de-Haen,chemically pure) are dissolved in 5 g of demineralized water, heated to 80°C, under stirring, for 30 minutes. In the meantime, 49.141 g of colloidal silica (Aldrich, Ludox HS40, 40%p/p SiO₂ in water), 50.917 g of a solution of tetraethylammonium hydroxide (TEAOH, Sigma-Aldrich, 35% p/p) and 8.615 g of a solution of NaOH (4 mol/dm³) are mixed and stirred for 30 minutes at room temperature. The two solutions are subsequently joined and mixed for a further two hours at room temperature. The resulting gel is heated to 80°C in an oil bath and dried under stirring. About 1.5 g of the resulting solid are poured into an autoclave coated with teflon, with 2 g of demineralized water, heated to 175° for 48 hours, obtaining a dry gel with a ratio between the Si moles and Al moles of 13.8. 18 batches of dry gel were thus crystallised in order to obtain about 14 g of Na-[Al] Beta-14.0.

The templating agent is removed by heating in a flow of N₂ (58 1/hr) from room temperature to 450 °C (1 °C/min), maintaining a temperature of 450°C for 24 hours, subsequently changing the gaseous feed to air (58 1/hr), maintaining the same temperature for a further 24 hours. The zeolite without the templating agent is treated twice with an aqueous solution of NaNO₃ and mixed under stirring with an aqueous solution 1M of NaNO₃ for 4 hours at 80°C. After filtration, the zeolite is washed with demineralized water, dried at 80°C for 12 hours in an air oven. For the exchange with Cs, the Na-[Al]Beta is mixed under stirring in 40 ml per gram of dry zeolite with an aqueous solution 0.1M of CsCl for 4 hours at 80°C. After filtration the zeolite is washed with demineralized water, dried at 80°C for 12 hours in an air oven. The zeolite thus obtained has a Si/Al molar ratio of 14.

For ion exchange with [Ir(NH₃)₅Cl]Cl₂, 14 g of dry [Cs-Al]Beta zeolite are suspended in 400 cm³ of demineralized water. An aqueous solution of 1.011 g of [Ir(NH₃)₅Cl]Cl₂, in 70 cm³ of demineralized water is slowly added by means of a drip funnel, during 15 minutes of vigorous stirring. The suspension is heated under stirring for 4 hours to 80°C. The solid is filtered, washed with 1 1. of demineralized water and dried at 80°C for at least 48 hours in an air oven. This leads to a content of Ir of 3.3 % w/w. After ion exchange, the sample is calcined in air at 300° for 3 hours in an oven (heating at 0.5°C/min, flow-rate of 58 1/hour) . The catalyst powder is pressed without a binder at 127 MPa for 15 minutes and the tablets thus formed are ground and sieved. The fraction having dimensions ranging from 0.20 mm to 0.32 mm is that used for the subsequent catalytic tests.

The noble metal is reduced in the same equipment used for the catalytic tests at a pressure of 5.2 MPa and with a hydrogen flow of 130 cm³·min⁻¹, heating the sample from room temperature to 380°C with a heating rate of 2°C·min⁻¹ and maintaining the final temperature for 2 hours.

### Example 6 - 2.0 Pt/Na_{0.91},H₀.₀₉-Y (comparative)

A sample of Na-Y zeolite (Strem Chemicals, lot No. 148 960), having a Si/Al molar ratio of 2.41 is treated twice with an aqueous solution of NaNO₃. The treatment is carried out by suspending the zeolite in an aqueous solution of NaNO₃ 1M and maintaining the suspension under stirring for 4 hours at 80°C. After filtration, the zeolite is washed with demineralized water and dried at 80°C for 12 hours in an air oven.

13.7 g of the Na-Y zeolite thus obtained are suspended in 250 g of deionized water; an aqueous solution of 0.494 g of [Pt(NH₃)₄]Cl₂ (Chempur, 55,63 % Pt) in 100 g demineralized water is slowly added, over a period of 15 minutes, by means of a drip funnel, under vigorous stirring. At the end, the suspension is stirred for a further 2 hours at 80°C. The resulting solid is filtered, washed with deionized water and dried for 12 hours at 80°C in an air oven.

The solid obtained is then calcined in air at 300°C for 3 hours in an oven having a heating rate of 0.5°C/min and a flow-rate of 58 dm³/hour. The zeolite powder is pressed without a binder at 127 MPa for 15 minutes and the tablets thus formed are ground and sieved. The fraction having dimensions ranging from 0.20 mm to 0.32 mm is that used for the subsequent catalytic tests.

The composition thus obtained is in the form prior to the reduction treatment, i.e. it is in oxidized form. Said composition is then subjected to reduction under H₂, at a pressure of 5.2 MPa, heating from room temperature to 350°C with a rate of 2°C/min and maintaining the temperature at 350°C for 2 hours. The catalytic composition obtained is in the final reduced form and contains platinum in a quantity of 2.0% by weight with respect to the weight of the composition.

### Example 7 - 2.0 Pt/Na_{0.09},H_{0.91} -[B]Beta (comparative)

### a) Preparation of [B]Beta zeolite

### 1) Preparation of the seeds

A solution consisting of: 50.1 g of tetraethyl ammonium hydroxide 40% by weight in aqueous solution, 5.5 g of sodium hydroxide, 53.4 g of distilled water and 11.4 g of boric acid, is added to 90.5 g of colloidal silica Ludox AS 30%. After 4 hours of aging, under stirring, at room temperature, the mixture is crystallized in an autoclave at 150°C for 3 days.

At the end of the hydrothermal treatment, the autoclave is cooled and the milky suspension is kept under stirring, at room temperature for about 4 hours, and then used as source of seeds in the subsequent synthesis.

### 2) Preparation of the zeolite

A solution consisting of: 50.1 g of tetraethyl ammonium hydroxide 40% by weight in aqueous solution, 5.5 g of sodium hydroxide, 53.4 g of distilled water and 11.4 g of boric acid, is added to 90.5 g of colloidal silica Ludox AS 30%. After 4 hours of aging, under stirring at room temperature, 37 g of the milky suspension of seeds obtained in point 1) are added to the mixture. The final solution is crystallized in an autoclave at 150°C for 3 days.

At the end of the hydrothermal treatment, the autoclave is cooled. The solid obtained is separated from the mother liquor by filtration, washed by redispersion in water, re-filtered, dried and calcined at 550°C for 5 hours. XRD analysis reveals that the solid consists of pure [B]Beta zeolite, i.e. a Beta zeolite having a crystalline lattice composed of silicon oxide and boron oxide. The SiO₂/B₂O₃ ratio in the crystalline lattice is 27.

### b) Preparation of the catalyst

A sample is used of 1.5 g of [B]Beta zeolite prepared according to the previous point a). The sample is treated twice with an aqueous solution of NaNO₃. The treatment is effected by suspending the zeolite in an aqueous solution of NaNO₃ 1M, maintaining the suspension under stirring for 4 hours at 80°C. After filtration the zeolite is washed with deionized water and dried at 80°C for 12 hours in an air oven.

1.063 g of Na[B]Beta zeolite thus obtained are suspended in 150 g of deionized water; an aqueous solution of 0.115 g of [Pt(NH₃)₄]Cl₂ (Chempur, 55.63 % Pt) in 50 g of demineralized water is slowly added, over a period of 20 minutes, by means of a drip funnel, under vigorous stirring. At the end, the stirring is continued for a further 2 hours at 80°C. The resulting solid is filtered, washed with demineralized water and dried for 12 hours at 80°C in an air oven. The solid obtained is then calcined in air at 300°C for 3 hours in an oven having a heating rate of 0.5°C/min and an air flow of 58 dm³/hour.

The catalyst powder is pressed in without a binder at 127 MPa for 15 minutes and the tablets thus formed are ground and sieved. The fraction having dimensions ranging from 0.20 mm to 0.32 mm is that used for the subsequent catalytic tests. The composition thus obtained is in the form prior to the reduction treatment, i.e. it is in oxidized form. Said composition is then subjected to reduction under H₂ at a pressure of 5.2 MPa, heating from room temperature to 350°C with a rate of 2°C/min and maintaining the temperature at 350°C for 2 hours. The catalytic composition thus obtained is in the final reduced form and contains platinum in a quantity of 2.0% by weight with respect to the weight of the composition.

### Example 8 - 3.0 Pt/Li_{0.58},Na_{0.25},H_{0.17}-Y

Na-Y zeolite having a molar ratio n_{Si}/n_{Al} of 2.41, was purchased from Strem Chemicals, lot nr. 148 960. Before its further modification, 60 g of dry zeolite are suspended in 1.7 kg of an aqueous solution 1M of NaNO₃. The suspension is heated under stirring for 4 hours at 80°C. After filtration, the zeolite is washed with demineralized water and dried at 80°C for 12 hours in an air oven.

19.0 g of Na-Y zeolite are suspended in a solution of 26.5 g of lithium chloride in 625 g of demineralized water. Ion exchange is carried out for 4 hours at 80°C, under stirring. The zeolite thus obtained is filtered, washed with demineralized water and dried for at least 12 hours at 80°C in an air oven. This ion exchange procedure is repeated 4 times.

4.5 g of the dried Na-Y zeolite thus obtained, are suspended in 150 g of deionized water; an aqueous solution of 0.242 g of [Pt(NH₃)₄]Cl₂ (Chempur, 55.63 % Pt) in 50 g of demineralized water is slowly added over a period of 20 minutes, by means of a drip funnel, under vigorous stirring.

At the end, the stirring is continued for a further 2 hours at 80°C. The resulting solid is filtered, washed with deionized water and dried for 19 hours at 80°C in an air oven. After the ion exchange, the solid obtained is then calcined in air at 300°C for 3 hours in an oven having a heating rate of 0.5°C/min and an air flow of 58 dm³/hour.

The catalyst powder is pressed without a binder at 127 MPa for 15 minutes and the tablets thus formed are ground and sieved. The fraction having dimensions ranging from 0.20 mm to 0.32 mm is that used for the subsequent catalytic tests. The composition thus obtained is in the form prior to the reduction treatment, i.e. it is in oxidised form; it is then subjected to reduction under H₂ at a pressure of 5.2 MPa and with a hydrogen flow of 130 cm³·min⁻¹, heating the sample from room temperature to 350°C with a rate of 2°C/min and maintaining the temperature at 350°C for 2 hours. The catalytic composition thus obtained is in the final reduced form and contains platinum in a quantity of 3.0% by weight with respect to the weight of the composition.

### Example 9 : 0.95 Pt/Na_{0.75},La_{0.07},H_{0.04}-Y

Na-Y zeolite having a molar ratio n_{Si} / n_{Al} equal to 2.41 was purchased from Strem Chemicals (lot No. 148 960).

Before its modificatino, 60 g of dry zeolite are suspended in 1.7 kg of an aqueous solution 1M of NaNO₃. The suspension is heated under stirring for 4 hours at 80°C. After filtration, the zeolite is washed with demineralized water and dried at 80°C for 12 hours in an air oven.

15.0 g of Na-Y zeolite are suspended in 255 g of an aqueous solution 0.02 M of La(NO₃)₃ (Merck, for analysis, >99 %). The ion exchange is carried out for 3 hours at 80°C, under stirring. The zeolite thus obtained is filtered, washed with demineralized water and dried for at least 18 hours at 80°C in an air oven. The sample is calcined in an air flow, heating from room temperature to 120°C, with a heating rate of 0.5°C/min, maintaining this temperature for 2 hours in an oven with a synthetic air flow of 14.5 dm³·hour⁻¹ and a flow of N₂ of 14.5 dm³·hour⁻¹. The sample is then heated to 200°C with the same heating rate and maintained at this temperature for a further 2 hours. After this, the sample is heated to 450°C with the same heating rate and maintained at this temperature for further 2 hours.

4.7 g of the dried Na,La-Y zeolite thus obtained, are suspended in 150 g of deionized water; an aqueous solution of 0.086 g of [Pt(NH₃)₄]Cl₂ (Chempur, 55.63 % Pt) in 50 g of demineralized water is slowly added over a period of 20 minutes, by means of a drip funnel, under vigorous stirring.

At the end, the stirring is continued for a further 3.5 hours at 80°C. The resulting solid is filtered, washed with deionized water and dried for 17 hours at 80°C in an air oven. After the ion exchange, the solid obtained is then calcined in air at 300°C for 3 hours in an oven having a heating rate of 0.5°C/min and an air flow of 58 dm³/hour.

The catalyst powder is pressed without a binder at 127 MPa for 15 minutes and the tablets thus formed are ground and sieved. The fraction having dimensions ranging from 0.20 mm to 0.32 mm is that used for the subsequent catalytic tests. The composition thus obtained is in the form prior to the reduction treatment, i.e. it is in oxidized form; it is then subjected to reduction under H₂ at a pressure of 5.2 MPa and with a hydrogen flow of 130 cm³·min⁻¹, heating the sample from room temperature to 350°C with a heating rate of 2°C/min and subsequently maintaining the temperature at 350°C for 2 hours. The catalytic composition thus obtained is in the final reduced form and contains platinum in a quantity of 0.95% by weight with respect to the weight of the composition.

### Example 10 - 2.7 Pt/Na_{0.88},H_{0.12}-Y

Na-Y zeolite is suspended in 30 g of demineralized water per gram of dry zeolite, whereas an aqueous solution of 0.06 g of NH₄NO₃ (Merck, ≥ 99 wt. -%) per gram of dry zeolite in 50 g of demineralized water is slowly added by means of a drip funnel, under vigorous stirring. The suspension is stirred for 18 hours at 80°C. After filtration, washing with demineralized water and drying at 80°C, the ratio n_{Na}/n_{Al}, determined by ICP-OES, is equal to 0.86.

16.4 g of the Na-Y zeolite thus obtained, are suspended in 300 g of deionized water; an aqueous solution of 0.80 g of [Pt(NH₃)₄]Cl₂ (Chempur, 55.63 % Pt) in 100 g of demineralized water is slowly added over a period of 15 minutes, by means of a drip funnel, under vigorous stirring. At the end, the stirring is continued for a further 2 hours at 80°C. The resulting solid is filtered, washed with deionized water and dried for 12 hours at 80°C in an air oven. The solid obtained is then calcined in air at 300°C for 3 hours in an oven having a heating rate of 0.5°C/min and a flow-rate of 58 dm³/hour. The zeolite powder is pressed without a binder at 127 MPa for 15 minutes and the tablets thus formed are ground and sieved. The fraction having dimensions ranging from 0.20 µm to 0.32 µm is that used for the subsequent catalytic tests.

The composition thus obtained is in the form prior to the reduction treatment, i.e. it is in oxidized form. Said composition is then subjected to reduction under H₂, at a pressure of 5.2 MPa, heating from room temperature to 350°C with a rate of 2°C/min and maintaining the temperature at 350°C for 2 hours. The catalytic composition obtained is in the final reduced form and contains platinum in a quantity of 2.7% by weight with respect to the weight of the composition.

### Example 11 - 3.7 Pt/Na₀.₈₆,H₀.₁₄-Y

Na-Y zeolite is suspended in 30 g of demineralized water per gram of dry zeolite, whereas an aqueous solution of 0.07 g of NH₄NO₃ (Merck, ≥ 99 wt.-%) per gram of dry zeolite in 50 g of demineralized water is slowly added by means of a drip funnel, under vigorous stirring. The suspension is stirred for 18 hours at 80°C. After filtration, washing with demineralized water and drying at 80°C, the ratio n_{Na}/n_{Al}, determined by ICP-OES, is equal to 0.84.

13.7 g of the Na-Y zeolite thus obtained, are suspended in 250 g of deionized water; an aqueous solution of 0.914 g of [Pt(NH₃)₄]Cl₂ (Chempur, 55.63 % Pt) in 100 g of demineralized water is slowly added over a period of 15 minutes, by means of a drip funnel, under vigorous stirring. At the end, the stirring is continued for a further 2 hours at 80°C. The resulting solid is filtered, washed with deionized water and dried for 12 hours at 80°C in an air oven. The solid obtained is then calcined in air at 300°C for 3 hours

in an oven having a heating rate of 0.5°C/min and an air flow of 58 dm³/hour. The zeolite powder is pressed without a binder at 127 MPa for 15 minutes and the tablets thus formed are ground and sieved. The fraction having dimensions ranging from 0.20 mm to 0.32 mm is that used for the subsequent catalytic tests.

The composition thus obtained is in the form prior to the reduction treatment, i.e. it is in oxidized form. Said composition is then subjected to reduction under H₂, at a pressure of 5.2 MPa, heating from room temperature to 350°C with a rate of 2°C/min and maintaining the temperature at 350°C for 2 hours. The catalytic composition obtained is in the final reduced form and contains platinum in a quantity of 3.7% by weight with respect to the weight of the composition.

### Example 12

The catalysts of examples 1 to 5 are tested according to the method of the present invention in the reaction with cis-decalin (purity: 97.4%) under the following conditions: P= 5.2 MPa, WSHV= 0.4 hours⁻¹.

The moles of C1-C9 hydrocarbons formed by the reaction, are measured by means of Gaschromatography, the selectivities of each of the hydrocarbons are calculated as a ratio between the moles of said hydrocarbon and the total moles of C1-C9 hydrocarbons formed.

The following Table 1 indicates the values of the I_{Ir} indexes for the catalysts tested, corresponding to the respective SelC4/SelC2 ratios. The same table indicates, as a comparison, the conversion of decalin and the yield obtained at the temperature specified in the table to paraffins with 10 carbon atoms (OCDs) and to alkylcyclohexanes or alkylcyclopentanes with 10 carbon atoms (ROPs) calculated, respectively, as: [(OCDs)ₒᵤₜ-(OCDs)ᵢₙ]/(Decalin)ᵢₙ and [(ROPs)ₒᵤₜ-(ROPs)ᵢₙ]/ (Decalin)ᵢₙ

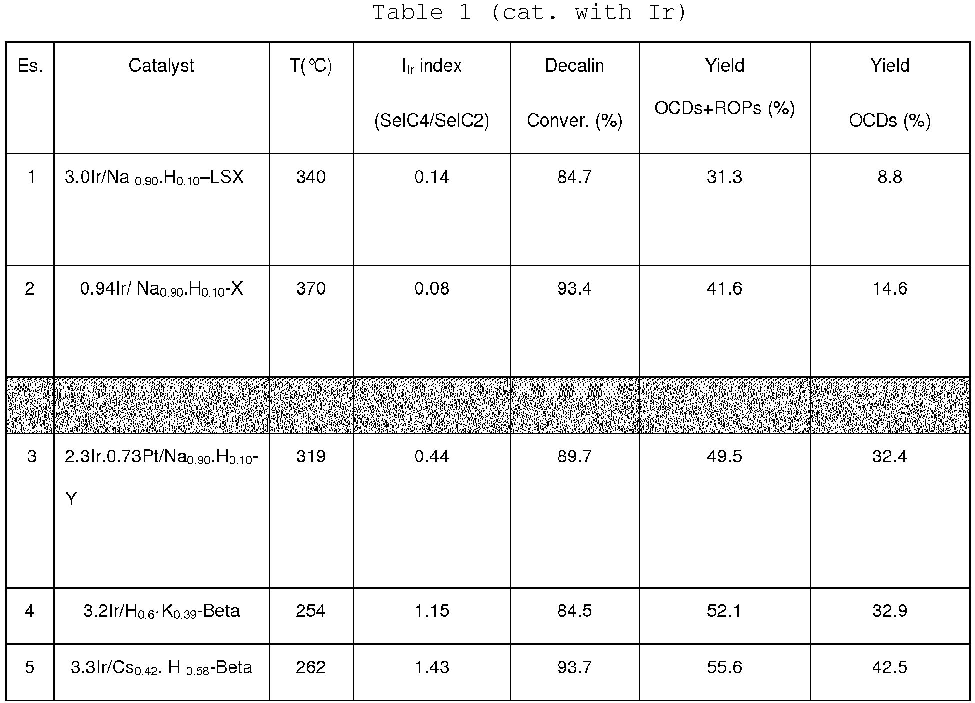

From a comparison of the data, it is evident that only the materials in which the SelC4/SelC2 ratio ranges from 0.2 to 10.0 (catalysts of Examples 3-5) are capable of providing yields to paraffins with 10 carbon atoms (OCDs) > 25%, this being the yield threshold considered as corresponding to a possible industrial application in an upgrading process; when this range is not observed, as in the case of the catalysts of Examples 1-2, the yields to OCDs are too low to be of industrial interest. Furthermore, the yields to all ring-opening products with ten carbon atoms, both paraffins (OCDs) and alkylcyclohexanes or alkylcyclopentanes (ROPs), are also higher if the catalyst has a SelC4/SelC2 ratio within the range of 0.2 - 10.0.

### Example 13

The test of Example 12 is repeated, using catalysts 6 to 11. The results obtained are indicated in the following Table 2

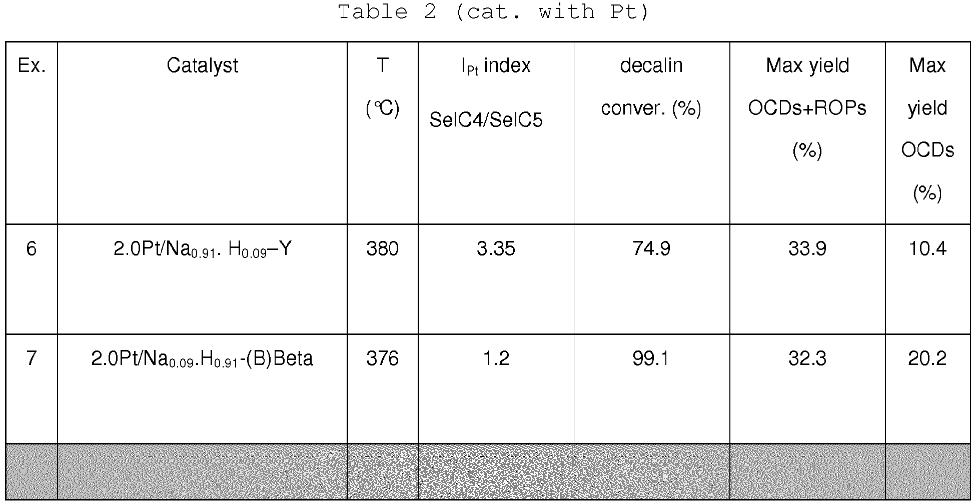

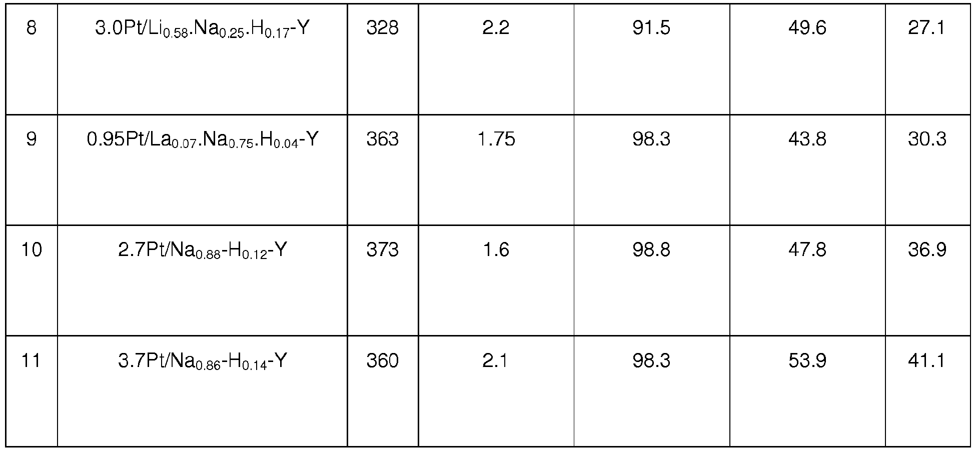

It appears evident that only materials having a SelC4/SelC5 ratio ranging from 1.3 to 2.4 (catalysts of Examples 8-11) are capable of providing yields to paraffins with 10 carbon atoms (OCDs) > 25%; when this range is not observed, as in the case of the catalysts of Examples 6-7, the yields to OCDs are too low to be of industrial interest. Furthermore, the yields to all ring-opening products with ten carbon atoms, both paraffins (OCDs) and alkylcyclohexanes or alkylcyclopentanes (ROPs), are also higher if the catalyst has a SelC4/SelC5 ratio within the range of 1.3 - 2.4.

### Example 14 - 3.0 Ir/Na_{0.53}, H_{0.47} - Beta - 14

3.0 g of dry zeolite Na-[Al]Beta-14, prepared as described in example 4, are suspended in 150 g of demineralized water.

An aqueous solution of 0.2156 g of [Ir(NH₃)₅Cl]Cl₂ (Colonial Metals, 49.9% Ir) in 50 g of demineralized water is slowly added, by means of a drip funnel, for 20 minutes under vigorous stirring. At the end of this operation, the suspension is stirred for 4 hours at 80°C. The solid is then filtered, washed with 1.0 dm³ of demineralized water and dried for 12 hours at 80°C in a ventilated oven.

The zeolite thus obtained has a Si/Al ratio of 14. The zeolite in powder form is pressed without a binder at 127 MPa for 15 minutes and the tablets thus formed are ground and sieved. The fraction having a particle-size ranging from 0.20 µm to 0.32 µm is used for the subsequent catalytic tests. The catalyst thus obtained is calcined in air at 300°C for 3 hours in a continuous flow reactor, with a heating rate of 0.5 K.min⁻¹ and a flow-rate of 200 cm³. min⁻¹ of synthetic air. The noble metal is reduced in the same equipment used for the catalytic tests at a pressure of 5.2 MPa and with a hydrogen flow of 130 cm³·min⁻¹, heating the sample from room temperature to 380°C with a heating rate of 2 K·min⁻¹ and maintaining the final temperature for 2 hours.

The catalytic composition thus obtained is in the final reduced form and contains iridium in a quantity of 3.0% by weight with respect to the total weight.

### Esempio 15 - 3.4 Ir/Na_{0.56}, H_{0.44}- Beta - 21

A beta zeolite with a Si/Al molar ratio of 21 was prepared according to the dry-gel method: 7.291 of Al₂(SO₄)₃ · 18 H₂O are dissolved in 5 g of demineralized water. The solution is then heated to 80°C and stirred for 30 minutes. In the meantime, 69.190 g of colloidal SiO₂ (Ludox HS-40), 66.842 of TEAOH (tetraethyl ammonium hydroxide) and 12.977 g of a solution of NaOH 4M are mixed and stirred for 30 minutes at room temperature. The two solutions are then mixed and stirred for a further 2 hours at room temperature. At the end of this operation, the gel obtained is heated to 80°C in an oil bath and dried under stirring. At this point, about 1.5 g of the dried gel are introduced into the autoclave coated with Teflon described above, with 2 g of demineralized water. The conversion is carried out at 175°C for 48 hours. The ratio nₛᵢ/n_{Al} of the dry gel is 21.1 whereas the ratio nₛᵢ/n_{Al} of the sample after treatment, determined by means of ICP-OES, is equal to 20.9.

3.0 g of the dry Na-[Al]Beta-21 zeolite thus obtained are suspended in 150 g of demineralized water. An aqueous solution of 0.2156 g of [Ir(NH₃)₅Cl]C1₂ (Colonial Metals, 49.9% Ir) in 50 g of demineralized water is slowly added, by means of a drip funnel, for 20 minutes under vigorous stirring. At the end of this operation, the suspension is stirred for 4 hours at 80°C. The solid is then filtered, washed with 1.0 dm³ of demineralized water and dried for 12 hours at 80°C in a ventilated oven. The zeolite thus obtained has a Si/Al molar ratio of 21.

The zeolite in powder form is pressed without a binder at 127 MPa for 15 minutes and the tablets thus formed are ground and sieved. The fraction having a particle-size ranging from 0.20 to 0.32 µm is used for the subsequent catalytic tests. The catalyst thus obtained is calcined in air at 300°C for 3 hours in a continuous flow reactor with a heating rate of 0.5 K·min⁻¹ and a flow-rate of 200 cm³·min⁻¹ of synthetic air. The noble metal is reduced in the same equipment used for the catalytic tests at a pressure of 5.2 MPa and with a hydrogen flow of 130 cm³·min⁻¹, heating the sample from room temperature to 380°C with a heating rate of 2 K·min⁻¹ maintaining the final temperature for 2 hours.

The catalytic composition thus obtained is in the final reduced form and contains iridium in a quantity of 3.4% by weight with respect to the total weight.

### Example 16 - 3.1 Ir/Na₀.₈₂ , H_{0.18}- Beta - 8

A beta zeolite having a Si/Al ratio of 8 was prepared using seeds of a beta-24 zeolite in the following way:
a) preparation of seeds of beta-24 zeolite, i.e. a beta zeolite with a Si/Al molar ratio equal to 24: 49.714 g of tetraethyl ammonium hydroxide (TEAOH) and 0.45 g of NaOH are mixed and stirred for 30 minutes at room temperature. 1.581 g of aluminium iso-propoxide are subsequently added and the stirring is continued until complete dissolution. Finally, 75.200 g of colloidal silica Ludox-SM30 are added and the gel is stirred for a further 30 minutes. Crystallization is effected for two days at 100°C in an autoclave internally coated with Teflon. The solid obtained is separated by centrifugation. The zeolite is suspended in demineralized water and subjected to treatment with an ultrasound bath to separate the nano-crystals. Finally, the water is removed by freeze-drying. The nSi/nAl ratio of the solid, determined through ICP-OES, is equal to 24.2.
b) preparation of zeolite beta-8: for the synthesis of Na-[Al]Beta-8 zeolite, 3.082 g of aluminium iso-propoxide 6.192 g of NaOH and 50.082 g of colloidal silica Ludox SM-30 are mixed and stirred for 30 minutes at room temperature. 1.020 g of seeds of Na-[Al]Beta-24 zeolite prepared in point a), are subsequently added to the gel and stirring is effected for 30 minutes. Crystallization is carried out for 12 hours at 100°C in a steel autoclave internally coated with Teflon. The zeolite obtained is filtered and washed with 1 dm³ of demineralized water and dried for 12 hours at 80°C in a ventilated oven. The removal of the templating agent is effected by heating the sample of zeolite from room temperature to 450°C with a heating rate of 1 K.min⁻¹ under a nitrogen flow. The temperature of 450°C is maintained for 24 hours after which air is sent, maintaining the temperature of 450°C for a further 24 hours. At the end of this operation, the zeolite is suspended in 40 cm³ of a solution of NaNO₃ 1M at 80°C for 4 hours. The operation is repeated twice. After each treatment, the zeolite sample is filtered and washed with demineralized water until the disappearance of the nitrate ions in the washing water. It is finally dried for 12 hours at 80°C in a ventilated oven. The nSi/nAl ratio of the zeolite thus obtained proves to be equal to 7.7 after analysis by 29Si MAS NMR.

The zeolite free of the templating agent is treated twice with an aqueous solution of NaNO₃ under stirring with a solution of NaNO₃ 1M for 4 hours at 80°C. After filtration, the zeolite is washed with demineralized water and dried at 80°C for 12 hours in a ventilated oven with air.

3.0 g of dry Na-[Al]Beta-8 zeolite thus obtained are suspended in 150 g of demineralized water. An aqueous solution of 0.2156 g of [Ir(NH₃)₅Cl]C1₂ (Colonial Metals, 49.9% Ir) in 50 g of demineralized water are slowly added by means of a drip funnel for 20 minutes under vigorous stirring. At the end of this operation, the suspension is stirred for 4 hours at 80°C. The solid is subsequently filtered, washed with 1.0 dm³ of demineralized water and dried for 12 hours at 80°C in a ventilated oven. The zeolite thus obtained has a molar ratio Si/Al of 8.

The zeolite in powder form is pressed without a binder at 127 MPa for 15 minutes and the tablets thus formed are ground and sieved. The fraction with a particle size ranging from 0.20 to 0.32 µm is used for the subsequent catalytic tests. The catalyst thus obtained is calcined in air at 300°C for 3 hours in a continuous-flow reactor with a heating rate of 0.5 K·min⁻¹ and a flow of 200 cm³·min⁻¹ of synthetic air.

The noble metal is reduced in the same equipment used for the catalytic tests at the pressure of 5.2 MPa and a with hydrogen flow-rate of 130 cm³·min⁻¹, heating the sample from room temperature to 380°C with a heating rate of 2 K·min⁻¹, maintaining the final temperature for 2 hours.

The catalytic composition thus obtained is in the final reduced state and contains iridium in a quantity of 3.1% by weight with respect to the total weight.

### Example 17 - 3.5 Ir/Rb_{0.52}, H_{0.48}- Beta - 14

Na-[Al]Beta-14 zeolite, prepared as described in example 4, is suspended under stirring in 42 g of an aqueous solution of RbCl 0.1 M per gram of dry Na-[Al]Beta-14. The suspension is stirred for 4 hours at 80°C. After filtration, the zeolite is washed with demineralized water and dried at 80°C for 12 hours in a ventilated oven. The final nRb/nAl ratio determined by ICP-OES proves to be 0.95 and the nNa/nAl ratio 0.05.

3.0 g of dry zeolite Na-[Al]Beta-14 thus obtained are suspended in 150 g of demineralized water. An aqueous solution of 0.2156 g of [Ir(NH₃)₅Cl]Cl₂ (Colonial Metals, 49.9% Ir) in 50 g of demineralized water is slowly added, by means of a drip funnel for 20 minutes under vigorous stirring. At the end of this operation, the suspension is stirred for 4 hours at 80°C. The solid is then filtered, washed with 1.0 dm³ of demineralized water and dried for 12 hours at 80°C in a ventilated oven.

The zeolite thus obtained has a Si/Al ratio of 14. The zeolite, in powder form, is pressed, without a binder at 127 MPa for 15 minutes and the tablets thus formed are ground and sieved. The fraction with a particle size ranging from 0.20 µm to 0.32 µm is used for the subsequent catalytic tests. The catalyst thus obtained is calcined in air at 300°C for 3 hours in a continuous-flow reactor, with a heating rate of 0.5 K.min⁻¹ and a flow-rate of 200 cm³. min⁻¹ of synthetic air. The noble metal is reduced in the same equipment used for the catalytic tests at a pressure of 5.2 MPa and with a hydrogen flow of 130 cm³·min⁻¹, heating the sample from room temperature to 380°C with a heating rate of 2 K·min⁻¹and maintaining the final temperature for 2 hours. The catalytic composition thus obtained is in the final reduced state and contains iridium in a quantity of 3.5% by weight with respect to the total weight.

### Example 18 - 3.4 Ir/Cs_{0.42} , H_{0.58} - Beta - 14

Na-[Al]Beta-14 zeolite, prepared as described in example 4, is suspended under stirring in 42 g of an aqueous solution of CsCl 0.1 M per gram of dry Na-[Al]Beta-14. The suspension is stirred for 4 hours at 80°C. After filtration, the zeolite is washed with demineralized water and dried at 80°C for 12 hours in a ventilated oven. The final nCs/nAl ratio, determined by ICP-OES, proves to be 0.97 and the nNa/nAl ratio 0.07.

3.0 g of dry Na-[Al]Beta-14 zeolite thus obtained are suspended in 150 g of demineralized water. An aqueous solution of 0.2156 g of [Ir(NH₃)₅Cl]Cl₂ (Colonial Metals, 49.9% Ir) in 50 g of demineralized water is slowly added, by means of a drip funnel, for 20 minutes under vigorous stirring. At the end of this operation, the suspension is stirred for 4 hours at 80°C. The solid is then filtered, washed with 1.0 dm³ of demineralized water and dried for 12 hours at 80°C in a ventilated oven. The zeolite thus obtained has a Si/Al ratio of 14. The zeolite, in powder form, is pressed, without a binder at 127 MPa for 15 minutes and the tablets thus formed are ground and sieved. The fraction having a particle-size ranging from 0.20 µm to 0.32 µm is used for the subsequent catalytic tests. The catalyst thus obtained is calcined in air at 300°C for 3 hours in a continuous-flow reactor, with a heating rate of 0.5 K min⁻¹ and a flow-rate of 200 cm³. min⁻¹ of synthetic air. The noble metal is reduced in the same equipment used for the catalytic tests at a pressure of 5.2 MPa and with a hydrogen flow of 130 cm³·min⁻¹, heating the sample from room temperature to 380°C with a heating rate of 2 K·min⁻¹ and maintaining the final temperature for 2 hours. The catalytic composition thus obtained is in the final reduced state and contains iridium in a quantity of 3.4% by weight with respect to the total weight.

### Example 19 - 3.4 Ir/K_{0.66}, H_{0.22}, Na_{0.12} - Beta - 8

Na-[Al]Beta-8 zeolite, prepared as described in example 16, is suspended under stirring in 42 g of an aqueous solution of KCl 1 M per gram of dry Na-[Al]Beta-8. The suspension is stirred for 4 hours at 80°C. After filtration, the zeolite is washed with demineralized water and dried at 80°C for 12 hours in a ventilated oven. The final nK/nAl ratio, determined by ICP-OES, proves to be 0.81 and the nNa/nAl ratio 0.13.

3.0 g of dry Na-[Al]Beta-8 zeolite thus obtained are suspended in 150 g of demineralized water. An aqueous solution of 0.2156 g of [Ir(NH₃)₅Cl]Cl₂ (Colonial Metals, 49.9% Ir) in 50 g of demineralized water is slowly added, by means of a drip funnel, for 20 minutes under vigorous stirring. At the end of this operation, the suspension is stirred for 4 hours at 80°C. The solid is then filtered, washed with 1.0 dm³ of demineralized water and dried for 12 hours at 80°C in a ventilated oven. The zeolite thus obtained has a Si/Al ratio of 8. The zeolite, in powder form, is pressed, without a binder at 127 MPa for 15 minutes and the tablets thus formed are ground and sieved. The fraction having a particle-size ranging from 0.20 µm to 0.32 µm is used for the subsequent catalytic tests. The catalyst thus obtained is calcined in air at 300°C for 3 hours in a continuous-flow reactor, with a heating rate of 0.5 K·min⁻¹ and a flow-rate of 200 cm³. min⁻¹ of synthetic air. The noble metal is reduced in the same equipment used for the catalytic tests at a pressure of 5.2 MPa and with a hydrogen flow of 130 cm³·min⁻¹, heating the sample from room temperature to 380°C with a heating rate of 2 K·min⁻¹ and maintaining the final temperature for 2 hours. The catalytic composition thus obtained is in the final reduced state and contains iridium in a quantity of 3.4% by weight with respect to the total weight.

### Example 20 - 3.4 Ir/Rb_{0.56}, H_{0.25} , Na_{0.19} - Beta - 8

Na-[Al]Beta-8 zeolite, prepared as described in example 16, is suspended under stirring in 42 g of an aqueous solution of RbCl 0.1 M per gram of dry Na-[Al]Beta-8. The suspension is stirred for 4 hours at 80°C. After filtration, the zeolite is washed with demineralized water and dried at 80°C for 12 hours in a ventilated oven. The final nRb/nAl ratio, determined by ICP-OES, proves to be 0.65 and the nNa/nAl ratio 0.25.

3.0 g of dry Na-[Al]Beta-8 zeolite thus obtained are suspended in 150 g of demineralized water. An aqueous solution of 0.2156 g of [Ir(NH₃)₅Cl]Cl₂ (Colonial Metals, 49.9% Ir) in 50 g of demineralized water is slowly added, by means of a drip funnel, for 20 minutes under vigorous stirring. At the end of this operation, the suspension is stirred for 4 hours at 80°C. The solid is then filtered, washed with 1.0 dm³ of demineralized water and dried for 12 hours at 80°C in a ventilated oven. The zeolite thus obtained has a Si/Al ratio of 8. The zeolite, in powder form, is pressed, without a binder at 127 MPa for 15 minutes and the tablets thus formed are ground and sieved. The fraction having a particle-size ranging from 0.20 µm to 0.32 µm is used for the subsequent catalytic tests. The catalyst thus obtained is calcined in air at 300°C for 3 hours in a continuous-flow reactor, with a heating rate of 0.5 K·min⁻¹ and a flow-rate of 200 cm³. min⁻¹ of synthetic air. The noble metal is reduced in the same equipment used for the catalytic tests at a pressure of 5.2 MPa and with a hydrogen flow of 130 cm³·min⁻¹, heating the sample from room temperature to 380°C with a heating rate of 2 K·min⁻¹ and maintaining the final temperature for 2 hours. The catalytic composition thus obtained is in the final reduced state and contains iridium in a quantity of 3.4% by weight with respect to the total weight.

### Example 21 - 2.0 Ir/Cs₀.₈₀, H₀.₂₀-Beta- 14

Na-[Al]Beta-14 zeolite, prepared as described in example 4, is suspended under stirring in 42 g of an aqueous solution of CsCl 0.1 M per gram of dry Na-[Al]Beta-14. The suspension is stirred for 4 hours at 80°C. After filtration, the zeolite is washed with demineralized water and dried at 80°C for 12 hours in a ventilated oven. The final nCs/nAl ratio, determined by ICP-OES, proves to be 0.97 and the nNa/nAl ratio 0.03.

3.0 g of dry Na-[Al]Beta-8 zeolite thus obtained are suspended in 150 g of demineralized water. An aqueous solution of 0.1323 g of [Ir(NH₃)₅Cl]Cl₂ (Colonial Metals, 49.9% Ir) in 50 g of demineralized water is slowly added, by means of a drip funnel, for 20 minutes under vigorous stirring. At the end of this operation, the suspension is stirred for 4 hours at 80°C. The solid is then filtered, washed with 1.0 dm³ of demineralized water and dried for 12 hours at 80°C in a ventilated oven. The zeolite thus obtained has a Si/Al ratio of 14. The zeolite, in powder form, is pressed, without a binder at 127 MPa for 15 minutes and the tablets thus formed are ground and sieved. The fraction having a particle-size ranging from 0.20 µm to 0.32 µm is used for the subsequent catalytic tests. The catalyst thus obtained is calcined in air at 300°C for 3 hours in a continuous-flow reactor, with a heating rate of 0.5 K·min⁻¹ and a flow-rate of 200 cm³. min⁻¹ of synthetic air. The noble metal is reduced in the same equipment used for the catalytic tests at a pressure of 5.2 MPa and with a hydrogen flow of 130 cm³·min⁻¹, heating the sample from room temperature to 380°C with a heating rate of 2 K·min⁻¹ and maintaining the final temperature for 2 hours. The catalytic composition thus obtained is in the final reduced state and contains iridium in a quantity of 2.0% by weight with respect to the total weight.

### Example 22 - 4.0 Ir/Cs_{0.53} , H_{0.47} - Beta - 14

Na-[Al]Beta-14 zeolite, prepared as described in example 4, is suspended under stirring in 42 g of an aqueous solution of CsCl 0.1 M per gram of dry Na-[Al]Beta-14. The suspension is stirred for 4 hours at 80°C. After filtration, the zeolite is washed with demineralized water and dried at 80°C for 12 hours in a ventilated oven. The final nCs/nAl ratio, determined by ICP-OES, proves to be 0.97 and the nNa/nAl ratio 0.03.

3.0 g of dry Na-[Al]Beta-14 zeolite thus obtained are suspended in 150 g of demineralized water. An aqueous solution of 0.2886 g of [Ir(NH₃)₅Cl]Cl₂ (Colonial Metals, 49.9% Ir) in 50 g of demineralized water is slowly added, by means of a drip funnel, for 20 minutes under vigorous stirring. At the end of this operation, the suspension is stirred for 4 hours at 80°C. The solid is then filtered, washed with 1.0 dm³ of demineralized water and dried for 12 hours at 80°C in a ventilated oven. The zeolite thus obtained has a Si/Al ratio of 14. The zeolite, in powder form, is pressed, without a binder at 127 MPa for 15 minutes and the tablets thus formed are ground and sieved. The fraction having a particle-size ranging from 0.20 µm to 0.32 µm is used for the subsequent catalytic tests. The catalyst thus obtained is calcined in air at 300°C for 3 hours in a continuous-flow reactor, with a heating rate of 0.5 K·min⁻¹ and a flow-rate of 200 cm³. min-¹ of synthetic air. The noble metal is reduced in the same equipment used for the catalytic tests at a pressure of 5.2 MPa and with a hydrogen flow of 130 cm³·min⁻¹, heating the sample from room temperature to 380°C with a heating rate of 2 K·min⁻¹ and maintaining the final temperature for 2 hours. The catalytic composition thus obtained is in the final reduced state and contains iridium in a quantity of 4.0% by weight with respect to the total weight.

### Example 23 - 4.8 Ir/Cs_{0.39}, H_{0.61} - Beta - 14

Na-[Al]Beta-14 zeolite, prepared as described in example 4, is suspended under stirring in 42 g of an aqueous solution of CsCl 0.1 M per gram of dry Na-[Al]Beta-14. The suspension is stirred for 4 hours at 80°C. After filtration, the zeolite is washed with demineralized water and dried at 80°C for 12 hours in a ventilated oven. The final nCs/nAl ratio, determined by ICP-OES, proves to be 0.97 and the nNa/nAl ratio 0.03.

3.0 g of dry Na-[Al]Beta-14 zeolite thus obtained are suspended in 150 g of demineralized water. An aqueous solution of 0.3607 g of [Ir(NH₃)₅Cl]Cl₂ (Colonial Metals, 49.9% Ir) in 50 g of demineralized water is slowly added by means of a drip funnel, for 20 minutes under vigorous stirring. At the end of this operation, the suspension is stirred for 4 hours at 80°C. The solid is then filtered, washed with 1.0 dm³ of demineralized water and dried for 12 hours at 80°C in a ventilated oven. The zeolite thus obtained has a Si/Al ratio of 14. The zeolite, in powder form, is pressed, without a binder at 127 MPa for 15 minutes and the tablets thus formed are ground and sieved. The fraction having a particle-size ranging from 0.20 µm to 0.32 µm is used for the subsequent catalytic tests. The catalyst thus obtained is calcined in air at 300°C for 3 hours in a continuous-flow reactor, with a heating rate of 0.5 K·min⁻¹ and a flow-rate of 200 cm³. min⁻¹ of synthetic air. The noble metal is reduced in the same equipment used for the catalytic tests at a pressure of 5.2 MPa and with a hydrogen flow of 130 cm³·min⁻¹, heating the sample from room temperature to 380°C with a heating rate of 2 K·min⁻¹ and maintaining the final temperature for 2 hours. The catalytic composition thus obtained is in the final reduced state and contains iridium in a quantity of 4.8% by weight with respect to the total weight.

### Example 24 - 2.8 Pt/Na_{0.83}, H_{0.17} - Beta - 8

3.0 g of dry Na-[Al]Beta-8 zeolite, prepared as described in Example 16, are suspended in 150 g of demineralized water. An aqueous solution of 0.1613 g of [Pt(NH₃)₄]Cl₂ (ChemPur, 55.63% Pt) in 50 g of demineralized water are slowly added by means of a drip funnel for 20 minutes under vigorous stirring. At the end of this operation, the suspension is stirred for 4 hours at 80°C. The solid is subsequently filtered, washed with 1.0 dm³ of demineralized water and dried for 12 hours at 80°C in a ventilated oven. The zeolite thus obtained has a molar ratio Si/Al of 8. The zeolite in powder form is pressed without a binder at 127 MPa for 15 minutes and the tablets thus formed are ground and sieved. The fraction having a particle-size ranging from 0.20 to 0.32 µm is used for the subsequent catalytic tests. The catalyst thus obtained is calcined in air at 300°C for 3 hours in a continuous-flow reactor with a heating rate of 0.5 K·min⁻¹ and a flow of 200 cm³·min⁻¹ of synthetic air. The noble metal is reduced in the same equipment used for the catalytic tests at the pressure of 5.2 MPa and a with hydrogen flow-rate of 130 cm³·min⁻¹, heating the sample from room temperature to 380°C with a heating rate of 2 K·min⁻¹, maintaining the final temperature for 2 hours. The catalytic composition thus obtained is in the final reduced state and contains platinum in a quantity of 2.8% by weight with respect to the total weight.

### Example 25 - 3.2 Ir/K_{0.39}, H₀.₆₁ - Beta - 14

Na-[Al]Beta-14 zeolite, prepared as described in example 4, is suspended under stirring in 42 g of an aqueous solution of KC1 1 M per gram of dry Na-[Al]Beta-14. The suspension is stirred for 4 hours at 80°C. After filtration, the zeolite is washed with demineralized water and dried at 80°C for 12 hours in a ventilated oven. The final nK/nAl ratio, determined by ICP-OES, proves to be 0.87 and the nNa/nAl ratio 0.13.

3.0 g of dry Na-[Al]Beta-14 zeolite thus obtained are suspended in 150 g of demineralized water. An aqueous solution of 0.2156 g of [Ir(NH₃)₅Cl]Cl₂ (Colonial Metals, 49.9% Ir) in 50 g of demineralized water is slowly added by means of a drip funnel, for 20 minutes under vigorous stirring. At the end of this operation, the suspension is stirred for 4 hours at 80°C. The solid is then filtered, washed with 1.0 dm³ of demineralized water and dried for 12 hours at 80°C in a ventilated oven. The zeolite thus obtained has a Si/Al ratio of 14. The zeolite, in powder form, is pressed, without a binder at 127 MPa for 15 minutes and the tablets thus formed are ground and sieved. The fraction having a particle-size ranging from 0.20 µm to 0.32 µm is used for the subsequent catalytic tests. The catalyst thus obtained is calcined in air at 300°C for 3 hours in a continuous-flow reactor, with a heating rate of 0.5 K·min⁻¹and a flow-rate of 200 cm³. min⁻¹ of synthetic air. The noble metal is reduced in the same equipment used for the catalytic tests at a pressure of 5.2 MPa and with a hydrogen flow of 130 cm³·min⁻¹, heating the sample from room temperature to 380°C with a heating rate of 2 K·min⁻¹ and maintaining the final temperature for 2 hours. The catalytic composition thus obtained is in the final reduced state and contains iridium in a quantity of 3.2% by weight with respect to the total weight.

### Example 26 - 3.3 Ir/Cs_{0.42}, H_{0.58} - Beta - 14

Na-[Al]Beta-14 zeolite, prepared as described in example 4, is suspended under stirring in 42 g of an aqueous solution of CsCl 1 M per gram of dry Na-[Al]Beta-14. The suspension is stirred for 4 hours at 80°C. After filtration, the zeolite is washed with demineralized water and dried at 80°C for 12 hours in a ventilated oven. The final nCs/nAl ratio, determined by ICP-OES, proves to be 0.97 and the nNa/nAl ratio 0.03.

3.0 g of dry zeolite Na-[Al]Beta-14 thus obtained are suspended in 150 g of demineralized water. An aqueous solution of 0.2156 g of [Ir(NH₃)₅Cl]Cl₂ (Colonial Metals, 49.9% Ir) in 50 g of demineralized water is slowly added by means of a drip funnel, for 20 minutes under vigorous stirring. At the end of this operation, the suspension is stirred for 4 hours at 80°C. The solid is then filtered, washed with 1.0 dm³ of demineralized water and dried for 12 hours at 80°C in a ventilated oven. The zeolite thus obtained has a Si/Al ratio of 14. The zeolite, in powder form, is pressed, without a binder at 127 MPa for 15 minutes and the tablets thus formed are ground and sieved. The fraction having a particle-size ranging from 0.20 µm to 0.32 µm is used for the subsequent catalytic tests. The catalyst thus obtained is calcined in air at 300°C for 3 hours in a continuous-flow reactor, with a heating rate of 0.5 K·min⁻¹ and a flow-rate of 200 cm³. min⁻¹ of synthetic air. The noble metal is reduced in the same equipment used for the catalytic tests at a pressure of 5.2 MPa and with a hydrogen flow of 130 cm³·min⁻¹, heating the sample from room temperature to 380°C with a heating rate of 2 K·min⁻¹ and maintaining the final temperature for 2 hours. The catalytic composition thus obtained is in the final reduced state and contains iridium in a quantity of 3.3% by weight with respect to the total weight.

### Example 27

The catalysts of Examples 14 to 26 are tested according to the method of the present invention in the reaction with cis-decalin (purity: 97.4%) under the following conditions: P = 5.2 MPa WHSV = 0.4 hours⁻¹

The moles of C1-C9 hydrocarbons formed by the reaction are measured by means of Gaschromatography, the selectivities of each of the hydrocarbons are calculated as a ratio between the moles of said hydrocarbon and the total moles of C1-C9 hydrocarbons formed.

Table 3 below indicates the values of the I_{Ir} indexes for the catalysts tested, corresponding to the respective SelC4/SelC2 ratios. The same table also indicates, as a comparison, the conversion of decalin and the yield obtained at the temperature indicated in the table to paraffins having 10 carbon atoms (OCDs) and to alkylcyclohexanes or alkylcyclopentanes having 10 carbon atoms (ROPs), respectively, calculated as: [(OCDs)ₒᵤₜ-(OCDs)ᵢₙ]/(Decalin)ᵢₙ and [(ROPs)ₒᵤₜ-(ROPs)ᵢₙ]/(Decalin)ᵢₙ

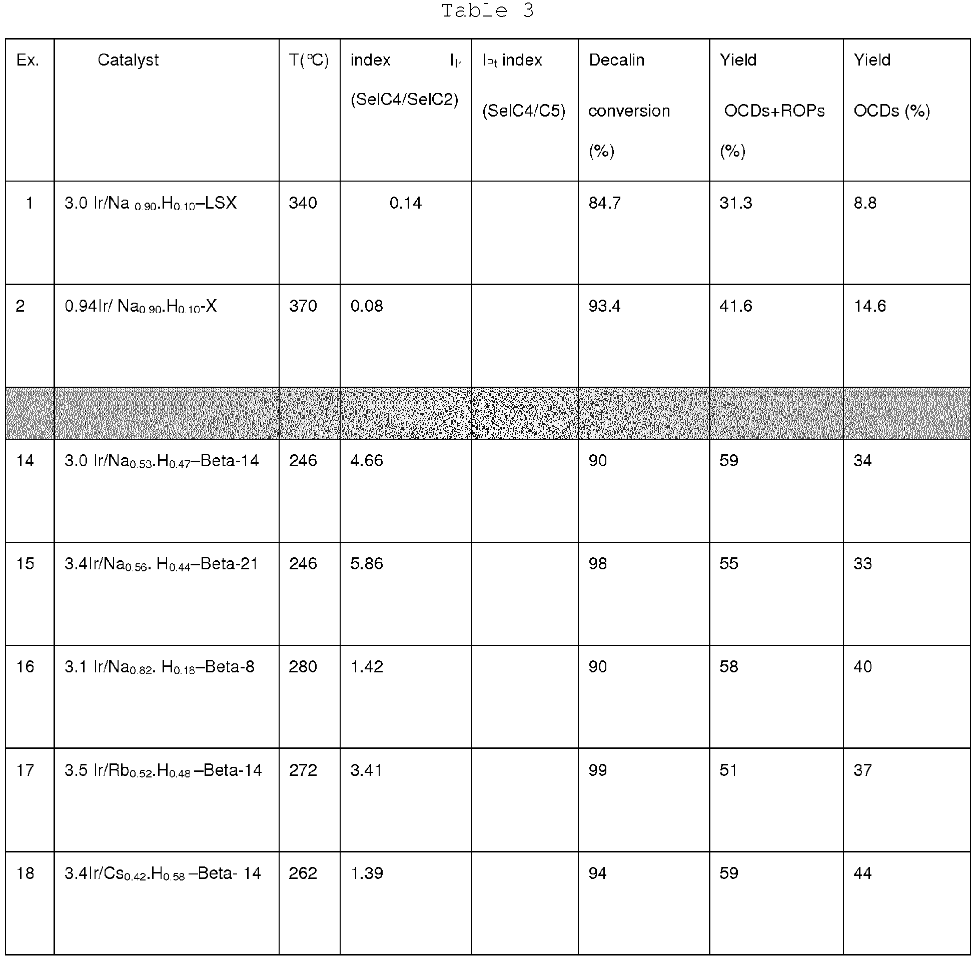

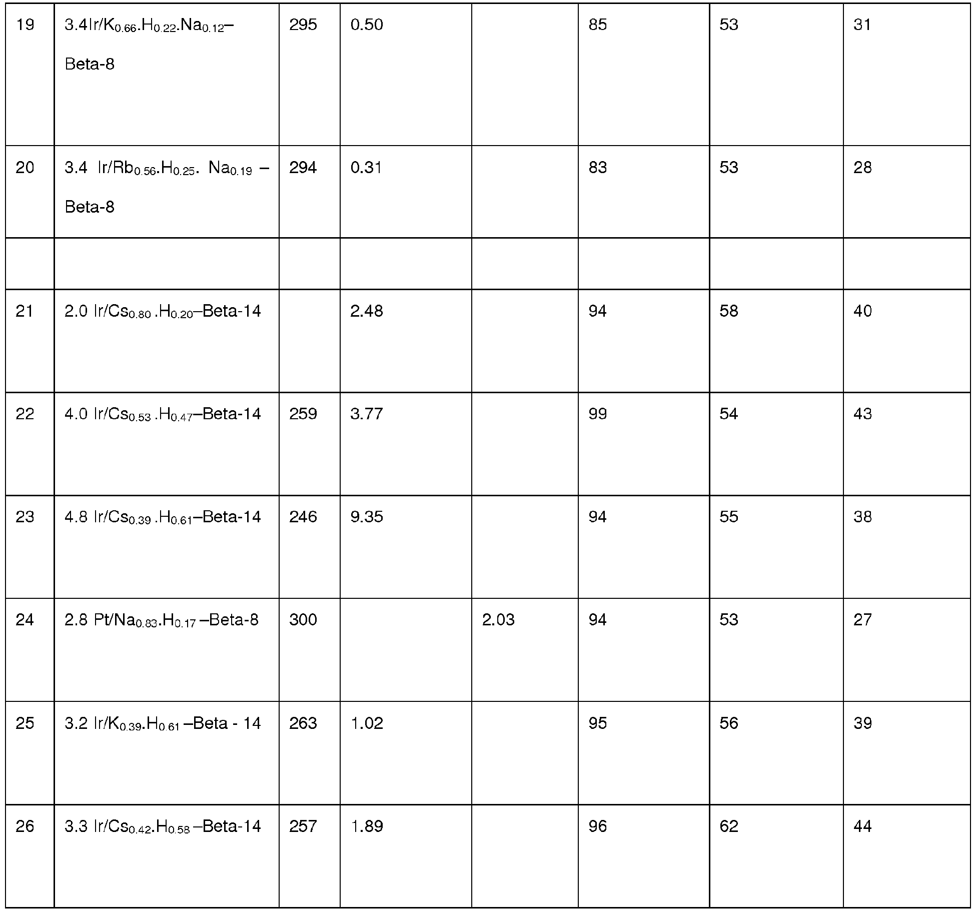

## Claims

1. A method for identifying upgrading catalysts from compositions (A) containing the following components:
a) Pt, Ir or mixtures thereof
b) a large-pore zeolite having a crystalline lattice composed of silica and an oxide YOX selected from alumina, boron oxide and mixtures thereof, wherein the negative charges present in the crystalline lattice are neutralized by one or more cations of metals Me selected from alkaline metals, alkaline-earth metals and lanthanoids, and x moles of hydrogen ions per mole of aluminium and/or boron, wherein x ranges from 0.04 to 0.65, wherein said method comprises:
(1) reacting decalin with hydrogen, in the presence of one of said catalytic compositions, at a temperature ranging from 250 to 380°C and a pressure equal to 5.2 MPa;
(2) calculating:
- for the compositions A_{Ir} the I_{Ir} index, wherein:
A_{Ir} is a catalytic composition (A) wherein the metal (a) is Ir or a mixture of Ir and Pt wherein the iridium moles are greater than or equal to the Pt moles, and I_{Ir} corresponds to the ratio SelC4/SelC2, wherein SelC4 and SelC2 are the selectivity to C4 hydrocarbons and C2 hydrocarbons respectively, obtained in the reaction of step (1),
- for the compositions A_{Pt} the I_{Pt} index wherein:
A_{Pt} is a catalytic composition (A) wherein the metal (a) is Pt or a mixture of Pt and Ir wherein the Pt moles are greater than the Ir moles, and I_{Pt} corresponds to the ratio SelC4/SelC5, wherein SelC4 and SelC5 are the selectivity to C4 hydrocarbons and to C5 hydrocarbons respectively, obtained in the reaction of step (1),
(3) comparing the I_{Ir} index obtained for the compositions of the A_{Ir} type within the range 0.2-10.0 and comparing the I_{Pt} index obtained for the compositions of the A_{Pt} type within the range 1.3-2.4, the catalytic compositions of the type A_{Ir} and A_{Pt}, whose relative indexes respectively fall within said ranges, including the extremes, being active.

2. A process for the upgrading of hydrotreated hydrocarbon mixtures which comprises reacting said mixtures with a catalytic composition (A) comprising the following components:
a) Pt, Ir or mixtures thereof
b) a large-pore zeolite having a crystalline lattice composed of silica and an oxide YOX selected from alumina, boron oxide and mixtures thereof, wherein the negative charges present in the crystalline lattice are neutralized by one or more cations of metals Me selected from alkaline metals, alkaline-earth metals and lanthanoids, and x moles of hydrogen ions per mole of aluminium and/or boron, wherein x ranges from 0.04 to 0.65, wherein said catalytic composition:
- when the metal (a) is Ir or a mixture of Ir and Pt wherein the iridium moles are greater than or equal to the Pt moles, is **characterized by** an I_{Ir} index ranging from 0.2 to 10.0, wherein said index corresponds to the ratio SelC4/SelC2, wherein SelC4 and SelC2 are the selectivity to C4 hydrocarbons and to C2 hydrocarbons respectively, obtained, by means of the catalytic composition, in the reaction of decalin with hydrogen at a temperature ranging from 250 to 380°C, at a pressure of 5.2 MPa;
- when the metal (a) is Pt or a mixture of Pt and Ir wherein the Pt moles are greater than the Ir moles, is **characterized by** an I_{Pt} index ranging from 1.3 to 2.4, wherein said I_{Pt} index corresponds to the ratio SelC4/SelC5, wherein SelC4 and SelC5 are the selectivity to C4 hydrocarbons and the selectivity to C5 hydrocarbons respectively, obtained by means of the catalytic composition, in the reaction of decalin with hydrogen at a temperature ranging from 250 to 380°C, at a pressure of 5.2 MPa.

3. The process according to claim 2, wherein the metals Me are selected from Na, Li, K, Rb, Cs, Sr, Ca, Mg, La, or mixtures thereof.

4. The process according to claim 2, wherein the metals Me are mixtures of lanthanoids or mixtures containing lanthanoids and one or more metals selected from alkaline metals and alkaline-earth metals.

5. The process according to claim 2, wherein the metallic component (a) is in a quantity ranging from 0.7 to 5% by weight with respect to the weight of the catalytic composition.

6. The process according to claim 2, wherein the large-pore zeolites are zeolites of the BEA, EMT, LTL, MAZ, MOR, OFF, FAU type.

7. The process according to claim 6, wherein the zeolite is a BEA, FAU, EMT or LTL zeolite.

8. The process according to claim 2, wherein the value of x ranges from 0.1 to 0.2.

9. The process according to claim 2, wherein the zeolite is a large-pore zeolite having a crystalline lattice composed of silica and an oxide YOX selected from alumina, boron oxide and mixtures thereof, wherein the negative charges present in the crystalline lattice are neutralized by x moles of hydrogen ions per mole of aluminium and/or boron, wherein x ranges from 0.04 to 0.65, and one or more cations of metals Me selected from alkaline metals, alkaline-earth metals and lanthanoids, wherein the sum of the products of the moles of each metallic cation Me times the valence of said metallic cation is equal to (1-x).

10. A process for the upgrading of hydrotreated hydrocarbon mixtures which comprises reacting said mixtures with a catalytic composition comprising then following components:
a) Ir or Pt
b) a Beta zeolite having a crystalline lattice composed of silica and an oxide YOX selected from alumina, boron oxide and mixtures thereof, wherein the negative charges present in the crystalline lattice are neutralized by one or more cations of metals Me selected from alkaline metals, alkaline-earth metals and lanthanoids, and x moles of hydrogen ions per mole of aluminium and/or boron, wherein x ranges from 0.45 to 0.65 or x is higher than or equal to 0.17 and lower than 0.45.

11. The process according to claim 10, wherein, when (a) is Pt and x is higher than or equal to 0.17 and lower than 0.45, the catalytic composition consists of a single catalytic area or more catalytic areas, all having the same composition.

12. The process according to claim 10, wherein the catalytic composition consists of a single catalytic area or more catalytic areas, all having the same composition.

13. The process according to claim 10, wherein the catalytic composition consists of components (a) and (b) and possibly a binder.

14. The process according to claim 10 to 13, wherein the component (b) is a Beta zeolite having a crystalline lattice composed of silica and an oxide YOX, with a molar ratio SiO₂/YOX ranging from 7 to 150, wherein the negative charges present in the crystalline lattice are neutralized by x moles of hydrogen ions per mole of aluminium and/or boron, wherein x ranges from 0.45 to 0.65, or x is higher than or equal to 0.17 and lower than 0.45, and by one or more cations of metals Me selected from alkaline metals, alkaline-earth metals and lanthanoids, wherein the sum of the products of the moles of each metallic cation Me times the valence of said metallic cation is equal to (1-x).

15. The process according to one or more of the claims from 10 to 14, wherein component (b) is a Beta zeolite having molar formula (A):
(l-x)/n Me . x H . YO₂ . y SiO₂ (A)
wherein Y is Al and/or B
Me is a cation of a metal selected from alkaline metals, alkaline-earth metals and lanthanoids,
H is a hydrogen ion,
y ranges from 3.5 to 75,
x corresponds to the moles of hydrogen ions and ranges from 0.45 to 0.65 or x is higher than or equal to 0.17 and lower than 0.45,
n is the valence of the cation Me.

16. The process according to claim 2 or 10, wherein the hydrotreated hydrocarbon mixtures which can be subjected to the upgrading process of the present invention are hydrocarbon cuts obtained by the hydrotreatment of oil cuts, wherein said oil cuts are selected from Thermal Cracking GasOil (TCGO), Visbreaking GasOil (VISGO), Coking GasOil (COGO), or mixtures thereof, Light Cycle Oil (LCO), Heavy Vacuum GasOil (HVGO), 420⁻ °C cut of Heavy Cycle Oil (HCO).

17. The process according to claim 2 or 10, wherein the hydrotreated hydrocarbon mixtures which can be subjected to the upgrading process of the present invention are hydrocarbon cuts obtained by the hydrotreatment of cuts of a petrochemical origin or the hydrotreated products of oil cuts.

18. The process according to claim 2 or 10, carried out at a temperature ranging from 240 to 380°C and at a pressure ranging from 3 to 10 MPa.

19. A catalytic composition comprising the following components:
a) Ir or Pt
b) a Beta zeolite having a crystalline lattice composed of silica and an oxide YOX selected from alumina, boron oxide and mixtures thereof, wherein the negative charges present in the crystalline lattice are neutralized by one or more cations of metals Me selected from alkaline metals, alkaline-earth metals and lanthanoids, and x moles of hydrogen ions per mole of aluminium and/or boron, wherein x ranges from 0.45 to 0.65, or x is higher than or equal to 0.17 and lower than 0.45.

20. The catalytic composition according to claim 19, wherein, when (a) is Pt and x is higher than or equal to 0.17 and lower than 0.45, the catalytic composition consists of a single catalytic area or more catalytic areas all having the same composition.

21. The composition according to claim 19, wherein the catalytic composition consists of a single catalytic area or more catalytic areas all having the same composition.

22. The composition according to claim 19, wherein the catalytic composition consists of components (a) and (b) and possibly a binder.

23. The catalytic composition according one or more of the claims from 19 to 22, comprising the following components:
a) Ir
b) a beta zeolite having a crystalline lattice composed of silica and an oxide YOX selected from alumina, boron oxide and mixtures thereof, wherein the negative charges present in the crystalline lattice are neutralized by one or more cations of metals Me selected from alkaline metals, alkaline-earth metals and lanthanoids and by x moles of hydrogen ions per mole of aluminium and/or boron, wherein x ranges from 0.45 to 0.65 or x is higher than or equal to 0.17 and lower than 0.45.

24. The catalytic composition according to one or more of the claims from 19 to 23, comprising the following components:
a) Ir
b) a beta zeolite having a crystalline lattice composed of silica and an oxide YOX selected from alumina, boron oxide and mixtures thereof, wherein the negative charges present in the crystalline lattice are neutralized by one or more cations of metals Me selected from alkaline metals, alkaline-earth metals and lanthanoids and by x moles of hydrogen ions per mole of aluminium and/or boron, wherein x ranges from 0.45 to 0.65.
